(19) Europäisches Patentamt
European Patent Office
Office européen des brevets

(11) Veröffentlichungsnummer : **0 156 989**
**B1**

(12) # EUROPÄISCHE PATENTSCHRIFT

(45) Veröffentlichungstag der Patentschrift : **09.09.87**

(51) Int. Cl.$^4$ : **G 06 F 13/10**, G 06 F 12/10

(21) Anmeldenummer : **84115600.3**

(22) Anmeldetag : **17.12.84**

(54) **Verfahren und Anordnung zur zeitgerechten Bereitstellung von reellen Speicheradressen für den direkten Zugriff zum Hauptspeicher durch periphere Geräte in einer Datenverarbeitungsanlage.**

(30) Priorität : **06.04.84 DE 3413054**

(43) Veröffentlichungstag der Anmeldung : **09.10.85 Patentblatt 85/41**

(45) Bekanntmachung des Hinweises auf die Patenterteilung : **09.09.87 Patentblatt 87/37**

(84) Benannte Vertragsstaaten :
**AT BE CH DE FR GB IT LI NL SE**

(56) Entgegenhaltungen :
**US-A- 4 231 088**
**US-A- 4 320 456**

(73) Patentinhaber : **Siemens Aktiengesellschaft Berlin und München**
**Wittelsbacherplatz 2**
**D-8000 München 2 (DE)**

(72) Erfinder : **Käfer, Klaus, Dr.**
**Metzstrasse 8**
**D-8000 München 80 (DE)**

**EP 0 156 989 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur zeitgerechten Bereitstellung von reellen Speicheradressen für den direkten Zugriff zum Hauptspeicher durch periphere Geräte in einer Datenverarbeitungsanlage entsprechend dem Oberbegriff des Patentanspruches 1 und eine Anordnung zur Durchführung dieses Verfahrens.

Datenverarbeitungsanlagen mit einem gesonderten Ein-/Ausgabeleitungssystem sind bereits in vielerlei Ausführungen bekannt, z. B. durch Electronic Design 7, March 29, 1979, Seiten 102 bis 106, insbesondere Fig. 4 auf Seite 104 ; durch « Regelungstechnische Praxis », Heft 11, 1975, Seiten 331 bis 339, insbesondere Bild 1 und 2 auf Seite 332 ; durch DE-OS 30 48 417, Fig. 1.

Die durch die ersten beiden genannten Literaturstellen bekannten Anordnungen zeichnen sich insbesondere dadurch aus, daß vom E/A-Leitungssystem aus ein direkter Zugriff zum Hauptspeicher möglich ist, so daß Daten zwischen den peripheren Geräten und dem Hauptspeicher unmittelbar ausgetauscht werden können.

Andererseits ist es bekannt, zunehmenden Speicherbedarf dadurch bereitzustellen, daß man neben dem Hauptspeicher einer Datenverarbeitungsanlage Sekundär- oder Hintergrundspeicher für die Bereitstellung von Programmen und Daten verwendet, aus denen die benötigten Programme und Daten bei Bedarf in den Hauptspeicher übernommen und aus diesem wieder ausgelagert werden. Zur Auswahl von Speicherwörtern in einem solchen kombinierten Speichersystem bedient man sich einer virtuellen Adressierung, wobei die virtuellen Adressen jeweils erst in Verbindung mit Übersetzungstafeln in reelle Adressen für den Zugriff zum Hauptspeicher umgesetzt werden müssen.

Auch für die Steuerung von Ein-/Ausgabevorgängen hat sich die virtuelle Adressierung vielfach durchgesetzt, wobei unterschiedliche Lösungswege beschritten worden sind.

Eine dieser Lösungsvarianten verwendet entsprechend erweiterte Ein-/Ausgabewerke, die die Adressenverwaltung und -übersetzung eigenständig durchführen. Das bringt zwar auf der einen Seite eine Entlastung des zentralen Prozessors der Datenverarbeitungsanlage, auf der anderen Seite aber eine entsprechende Vervielfachung der Adressenverwaltungs- und Übersetzungseinrichtungen mit sich ; was höhere Kosten und eine größere Fehlerwahrscheinlichkeit bei verringertem Speicherschutz bedingt.

Eine andere Lösungsvariante sieht daher eine zentralisierte Adressenverwaltungs- und Übersetzungseinrichtung eigens für Ein-/Ausgabe-Vorgänge vor, die von den Ein-/Ausgabewerken mit virtuellen Adressen bei der Speicheransteuerung angesteuert wird und diese im Echtzeitbetrieb an den Hauptspeicher weiterleitet. Eine derartige Zentralisierung liefert einen besseren Speicherschutz, senkt aber nicht die Speicherkosten, wenn man die Übersetzungstafeln nicht im Arbeitsspeicher selbst unterbringt. Letzteres aber kann zu erheblichen Verzögerungen beim Speicherzugriff führen, da der Zugriff zu den Übersetzungstafeln zusätzliche Speicherzugriffe erfordert.

Bei einer weiteren bekannten Lösungsvarianten wird demzufolge ausgehend von einer ebenfalls zentral vorgesehenen Adressenverwaltungs- und -übersetzungseinheit in dieser nur eine eigenständige Übersetzungstafel vorgesehen, in die im Voraus übersetzte Adressen eingetragen werden, mit denen dann die Speicherzugriffe der Ein-/Ausgabe-Werke ausgeführt werden. Dabei besteht die Möglichkeit, alle möglicherweise benötigten Seitenadressen für jeweils alle aktiven Ein-/Ausgabeprozesse bei Einleitung derselben im Voraus zu übersetzen und in der gesonderten zentralen Übersetzungstafel abzuspeichern. Dies bedeutet aber neben dem zum Teil unnötigen Speicheraufwand vielfach die Reservierung unnötiger Speicherbereiche im Hauptspeicher oder Einschränkungen bezüglich Struktur und Umfang der einzelnen Ein-/Ausgabeprozesse.

Man hat daher die Anzahl der im Voraus übersetzten Adressen je Ein-/Ausgabegerät auf eine vorgegebene Anzahl beschränkt — man siehe US-PS 4 231 088 — bzw. für jedes an ein Ein-/Ausgabemodul angeschlossene Gerät nur einen Adresseneintrag vorgesehen, der beim Aktivwerden dieses Gerätes durch einen zusätzlichen, dann bereitzustellenden Satz von Folgeadressen aufgestockt wird — man siehe US-PS 4 320 456.

Die zuletzt genannten beiden Lösungsvarianten benötigen am wenigsten Speichervolumen in der Adressenumsetzungseinrichtung. Bei der zuletzt genannten Lösungsvarianten sind aber mit jedem Wechsel eines Ein-/Ausgabeprozesses gesonderte Umladevorgänge im Echtzeitbetrieb erforderlich, damit die benötigten Adressen rechtzeitig zur Verfügung stehen, wodurch ggf. andere Ein-/Ausgabevorgänge behindert werden.

Weiterhin sind bei allen diesen Lösungsvarianten die Ein-/Ausgabewerke mit virtuellen Adressen belastet, die hin- und herübertragen werden müssen.

Aufgabe der Erfindung ist es daher, ausgehend von einer geeigneten Struktur für eine Datenverarbeitungsanlage ein effektiveres Verfahren zur zeitgerechten Bereitstellung von reellen Speicheradressen bei der Abwicklung von Ein-/Ausgabevorgängen zu schaffen, das kostengünstig zu realisieren ist, einen hohen Speicherschutz gewährleistet, eine unnötige Übertragung von virtuellen Adressen vermeidet und die den eigentlichen Datentransfer steuernden Einrichtungen auf dem Wege zwischen Hauptspeicher und den peripheren Geräten von den virtuellen Adressen weitgehend entlastet.

Diese Aufgabe wird ausgehend vom Oberbegriff des Patentanspruches 1 durch die kennzeichnenden Merkmale dieses Patentanspruches gelöst.

Die neue Lösung besteht dabei im wesentlichen aus einer Kombination von direkter Speicherzugriffssteuerung und der Bereitstellung einer vorgegebenen Anzahl von im Voraus übersetzten virtuellen Speicheradressen an zentraler Stelle. Diese zentrale Stelle befindet sich aber nicht wie bisher in einer übergeordneten Steuereinrichtung für die Steuerung der Ein-/Ausgabevorgänge, also beispielsweise im steuernden Prozessor des Ein-/Ausgabe-Systems, sondern ausgelagert in einem eigenständigen Modul des Ein-/Ausgabeleitungssystems, das bei jedem von einem peripheren Gerät ausgehenden Speicherzugriff zwangsläufig in den Adressenweg zum Hauptspeicher eingeschaltet wird. Auch werden für die Auswahl der im Voraus bereitgestellten reellen Adressenteile, z. B. für die Seitennummern, von den Ein-/Ausgabemodulen keine virtuellen Adressen geliefert, sondern vom Fortgang des eingeleiteten Ein-/Ausgabevorganges eines Gerätes abhängige Steuerparameter. Die Ein-/Ausgabemodule sind daher von virtuellen Adressen vollkommen entlastet, so daß sich auch die Steuerung der Ein-/Ausgabevorgänge über das Ein-/Ausgabeleitungssystem anpassungsfähiger gestalten läßt.

Ausgehend von diesem allgemeinen Lösungsprinzip beziehen sich Weiterbildungen der Erfindung auf die Bereitstellung der aufeinanderfolgend benötigten Kanalbefehle in geräteindividuellen Übergabebereichen eines Speichers und der zugehörigen reellen Datenfeldangaben in der Adressensteuerungseinrichtung in jeweils gleichartiger Zuordnungsfolge, auf die Verwaltung sowohl des Übergabebereiches als auch der Datenfeldeinträge in der Adressensteuerungseinrichtung nach gleichartigem Schema durch Zeiger mit Ableitung von Nachladeanforderungen von diesen Zeigern, auf das Anforderungsschema der peripheren Geräte, auf Sperrmechanismen bei fehlenden Einträgen, auf Reaktionen bei Programmverzweigungen und schließlich auf Anordnungen zur Durchführung der Verfahren.

Einzelheiten der Erfindung seien nachfolgend anhand von in der Zeichnung dargestellten Ausführungsbeispielen näher erläutert. Im einzelnen zeigen

Figur 1 ein Blockschaltbild einer Datenverarbeitungsanlage gemäß der Erfindung,

Figur 2 ein Blockschaltbild einer gegenüber der von Fig. 1 abgewandelten weiteren Datenverarbeitungsanlage gemäß der Erfindung,

Figur 3 ein Blockschaltbild der in Fig. 1 und Fig. 2 vorgesehenen Adressensteuereinrichtung,

Figur 4 ein Diagramm zur Erläuterung der Verwaltung der einzelnen Einträge in der Adressentabelle der Adressensteuereinrichtung,

Figur 5 ein Diagramm zur Erläuterung der Bereitstellung der Ein-/Ausgabebefehlswörter im geräteindividuellen Übergabebereich eines Speichers,

Figuren 6A und 6B ein Flußdiagramm zur Erläuterung der Arbeitsweise der Adressensteuereinrichtung,

Figuren 7A und 7B ein Flußdiagramm zur Erläuterung der Arbeitsweise des steuernden Prozessors beim Vorliegen von Nachladeanforderungen der Adressensteuerungseinrichtung und

Figur 8 ein Blockschaltbild einer weiteren Datenverarbeitungsanlage in Anlehnung an das von Fig. 2 bei Verwendung eines lokalen Speichers für die Übergabebereiche.

Die in Fig. 1 gezeigte Datenverarbeitungsanlage gemäß der Erfindung besteht in Anlehnung an bekannte Datenverarbeitungsanlagen aus einem Hauptspeicher MM mit Zugriffssteuerung, z. B. in Form eines Speicherleitungssystems S-BUS mit Zuteilungssteuerung BC-S, an die über Schnittstellensteuerungen S-ST ein Zentralprozessor CPU und ein Ein-/Ausgabesystem in Form eines weiteren Leitungssystems L-BUS mit mehreren selbständigen Ein-/Ausgabemodulen CE zur Ansteuerung von peripheren Geräten DEV angeschlossen sind. Das Ein-/Ausgabeleitungssystem L-BUS hat also wie der Zentralprozessor CPU über das Speicherleitungssystem S-BUS direkten Zugang zum Hauptspeicher MM.

Vom Zentralprozessor CPU veranlaßte Ein-/Ausgabeoperationen können entweder von diesem selbst, was gestrichelt angedeutet ist, oder aber von einem eigenständigen Prozessor IOP am Ein-/Ausgabeleitungssystem L-BUS gesteuert werden, der ebenfalls Zugang zum Speicherleitungssystem S-BUS hat und über dieses mit dem Hauptspeicher MM oder dem Zentralprozessor CPU verkehren kann.

In an sich bekannter Weise wird beim Abarbeiten eines Programms durch den Zentralprozessor CPU ein auftretender Ein-/Ausgabebefehl von diesem entschlüsselt, und es werden die notwendigen Steuerdaten einschließlich der Startadresse für das jeweilige Kanalprogramm im Hauptspeicher MM bereitgestellt, sowie das Ein-/Ausgabesystem über das Vorliegen eines Auftrages informiert. In einem weiteren Schritt wird dann vom Ein-/Ausgabeprozessor IOP unterstützt anhand der bereitgestellten Steuerdaten das eigentliche Kanalprogramm von den Ein-/Ausgabemodulen CE abgearbeitet.

Im Gegensatz zu vielen bekannten Anordnungen mit an einen Ein-/Ausgabeprozessor über gesonderte Kanäle angeschlossenen peripheren Einheiten oder Geräten führen die an das Ein-/Ausgabeleitungsystem L-BUS angeschlossenen Ein-/Ausgabemodule CE übertragene Ein-/Ausgabeaufträge weitgehend selbständig aus. Lediglich für die Einleitung und den Abschluß solcher Aufträge treten diese Module CE mit dem unterstützenden Prozessor z. B. dem gesondert vorgesehenen Ein-/Ausgabeprozessor IOP, in Verbindung, während vor allem der während eines Ein-/Ausgabeauftrages notwendig werdende Datentransfer zwischen dem peripheren Gerät DEV und dem Hauptspeicher MM einschließlich Befehlskettung, Datenkettung und Erzeugung der Abschlußinformationen von den Modulen CE selbständig abgewickelt wird.

Das bedeutet im einzelnen eine weitgehende Unabhängigkeit der Ein-/Ausgabemodule CE vom unterstützenden Prozessor IOP mit der Möglichkeit des direkten Zugriffs zum Hauptspeicher MM, wie er an sich bekannt ist. Trotz dieses direkten Speicherzugriffs besteht mit Hilfe des unterstützenden Prozessors IOP wie bei bekannten Großrechnersystemen mit virtueller Speicheradressierung auch für die Steuerung des Ein-/Ausgabesystems die Möglichkeit, die notwendige Adressenübersetzung an zentraler Stelle vorzunehmen, was weniger Aufwand erfordert und den Speicherschutz erhöht.

Diese Aufgabe wird im wesentlichen von der als zusätzliches Modul vorgesehenen Adressensteuerungseinrichtung ATU in Verbindung mit dem unterstützenden Prozessor IOP wahrgenommen. Die von den einzelnen Ein-/Ausgabeprogrammen zur Verfügung gestellten Speicheradressen sind also virtuell. Sie werden vom Zentralprozessor CPU und bei Ein-/Ausgabeoperationen vom gesonderten Prozessor IOP im Voraus übersetzt und in eine Tafel der Adressensteuerungseinrichtung ATU nach einem vorgegebenen Schema eingetragen, wobei das zugrundegelegte Übersetzungsverfahren beliebig sein kann. Die Module CE steuern bei Speicherzugriffen diese bereitgestellten Tafeleinträge nach einem vom Ablauf des Kanalprogramms bestimmten Schema an und bewirken dadurch die Bereitstellung der jeweils benötigten Adresse MM-AD für den Zugriff zum Hauptspeicher MM. Die Module CE benötigen dazu weder virtuelle noch reelle Seitenadressen, sondern stellen lediglich vom Programmablauf abhängige Zugriffsparameter für die Ansteuerung der Tafeleinträge in der Adressensteuereinrichtung ATU zur Verfügung und sind damit von Adressenzuordnungen und -übersetzungen weitgehend befreit.

Fig. 2 zeigt eine gegenüber der von Fig. 1 abgewandelte Datenverarbeitungsanlage, bei der der gesonderte Ein-/Ausgabeprozessor IOP und das Ein-/Ausgabeleitungssystem L-BUS über dieselbe Schnittstellensteuerung S-ST an das Speicherleitungssystem S-BUS angeschlossen sind, da sowieso nur jeweils eine Einrichtung zum Hauptspeicher MM zugreifen kann. In diesem Falle können die beiden Prozessoren CPU und IOP über ein gesondertes Prozessor-Leitungssystem P-BUS unmittelbar miteinander verkehren, an das andererseits auch die Adressensteuerungseinrichtung ATU angeschlossen ist, so daß die Tafeleinträge unabhängig vom Ein-/Ausgabeleitungssystem L-BUS übergeben werden können. Der Anschluß der Adressensteuereinrichtung ATU an das Ein-/Ausgabeleitungssystem ist dagegen in Form einer Schleife ausgebildet. In der einen Richtung werden die Zugriffsparameter Z-PAR entgegengenommen und in der anderen Richtung werden die benötigten Speicheradressen MM-AD auf die nicht gesondert gezeigten Adressenleitungen des Ein-/Ausgabeleitungssystems L-BUS geschaltet.

Für die nachfolgenden Erläuterungen sei unterstellt, daß für das Ein-/Ausgabesystem — wie gezeigt — ein eigener Prozessor IOP vorgesehen ist und daß im Hauptspeicher MM für jedes Ein-/Ausgabemodul CE ein Kommunikationsbereich CECOMA mit individuellen Bereichen DECOMA für jedes an das Modul CE angeschlossene Gerät DEV eingerichtet ist, über die die notwendigen Steuerdaten zwischen dem steuernden Prozessor CPU oder IOP sowie den Modulen CE ausgetauscht werden können.

Die geräteindividuellen Bereiche DECOMA umfassen dabei jeweils Abschnitte für die Aufnahme der die jeweilige Kanaloperation beschreibenden Daten, die vom Zentralprozessor CPU bereitgestellt und vom Ein-/Ausgabeprozessor IOP ausgewertet und verarbeitet werden, sowie Abschnitte für die Aufnahme einer vorgegebenen Anzahl, z. B. drei, von Kanalbefehlswörtern CCW mit den dazugehörigen Organisationsdaten CCW-DAT, die vom Prozessor IOP in Folge bereitgestellt werden. Außerdem enthält der Bereich CECOMA an vorgegebener Stelle wenigstens einen Abschnitt für die Auftragsübergabe vom Prozessor IOP an das jeweils betroffene Modul CE, das jeweils durch Setzen eines Auftragsmerkers infolge eines entsprechenden Befehls vom Prozessor IOP über das Leitungssystem L-BUS vom Vorliegen eines Auftrages informiert wird. Aufgrund des jeweils gesetzten Auftragsmerkers steuert das betroffene Modul CE über die Adressensteuereinrichtung ATU im direkten Speicherzugriff den Abschnitt für die Auftragsübergabe an, übernimmt den Auftrag und prüft, ob er ausgeführt werden kann.

Diese Prüfung kann beispielsweise zu drei unterschiedlichen Ergebnissen führen :

a) Der Auftrag kann ausgeführt werden. Das Modul steuert daher mit Hilfe der Adressensteuereinrichtung ATU den Hauptspeicher MM an, um den ersten bereitgestellten Kanalbefehl abzuholen, usw., bis das Ende des Auftrags erreicht ist und dies dem Prozessor IOP über das Leitungssystem L-BUS gemeldet wird.

b) Der Auftrag kann gegenwärtig nicht ausgeführt werden ; er wird daher in eine Warteschlange eingereiht, die beispielsweise ebenfalls durch einen Abschnitt im Übergabebereich CECOMA verwaltet wird.

c) Der Auftrag kann nicht ausgeführt werden ; dies wird dem unterstützenden Prozessor IOP mit einer Unterbrechungsmeldung über das Leitungssystem L-BUS mitgeteilt.

Der Austausch von Nachrichten über das Leitungssystem L-BUS zwischen den einzelnen Einheiten erfolgt in an sich bekannter Weise unter der Aufsicht der Zuteilungssteuerung BC-L, beispielsweise in Anlehnung an die in der eingangs bereits genannten DE-OS 30 48 417 beschriebenen Arbeitsweise mit Hilfe von Anforderungssignalen und anschließender Freigabe des Übertragungsweges zwischen dem anfordernden und dem angeforderten Modul, wobei die Adressen mit Steuerinformationen und die Daten parallel über verschiedene Leitungen oder aber nacheinander über dieselben Leitungen des Systems übertragen werden können. Analoges gilt für die übrigen Leitungssysteme.

Damit eine Ein-/Ausgabeoperation durch eines der gewünschten Module CE ausgeführt werden kann, muß vor der Auftragsweiterleitung vom Ein-/Ausgabeprozessor IOP an das zuständige Ein-/Ausgabemodul CE anhand der vom Zentralprozessor CPU bereitgestellten Daten, z. B. dem Kanaladreßwort CAW, das dadurch gekennzeichnete Programm zur Ausführung vorbereitet werden. Anschließend werden die ersten Kanalbefehlswörter CCW im zugehörigen Übergabebereich DECOMA des Kommunikationsbereiches CECOMA bereitgestellt und parallel dazu die benötigten Tafeleinträge in der Adressensteuerungseinrichtung ATU vorgenommen. Dabei sei unterstellt, daß im Übergabebereich immer drei aufeinanderfolgende Kanalbefehlswörter CCW bereitgestellt werden. Dies erfolgt erstmals jeweils während der Einleitungsphase eines Ein-/Ausgabebefehles und nachfolgend jeweils nach Bedarf auf Anforderung der Adressensteuerungseinrichtung ATU durch den Ein-/Ausgabeprozessor IOP.

Bevor jedoch der Bereitstellungsablauf im einzelnen erläutert werden soll, sei zunächst der Aufbau der Adressensteuerungseinrichtung ATU anhand von Fig. 3 näher erläutert. Wesentliche Bestandteile der Adressensteuerungseinrichtung ATU sind danach eine Adressentabelle AT, ein Steuerspeicher MCD und eine übergeordnete Steuerung ATU-ST.

Die Adressentabelle AT weist für jedes periphere Gerät, z. B. DEVx, eine Gruppe von acht Einträgen auf. Jeder Eintrag setzt sich aus einer reellen Seitennummer PPAGE und drei Steuerkennzeichen V, L und F zusammen. Die Seitenadresse PPAGE bildet jeweils zusammen mit einer bereitgestellten Zusatzadresse W-AD in an sich bekannter Weise auf indirektem Wege die reelle Zugriffsadresse MM-AD für den anzusteuernden Speicherplatz im Hauptspeicher MM. Von den drei Steuerkennzeichen ist V ein Gültigkeitsbit, L kennzeichnet die letzte Seite eines dem abzuarbeitenden Kanalbefehl zugehörigen Datenfeldes und F weist auf einen bei der Bereitstellung erkannten Fehler hin. Nur wenn das Gültigkeitsbit V gesetzt ist und kein Fehler angezeigt wird, darf der zugehörige Seiteneintrag PPAGE verwendet werden.

Von den jeweils acht Einträgen sind beispielsweise die Einträge 0 bis 5 paarweise den Datenfeldern von drei aufeinanderfolgenden, im Übergabebereich DECOMA bereitgestellten Kanalbefehlswörtern CCW zugeordnet, während die beiden restlichen Einträge jeweils für allgemeine Zugriffe zum Übergabebereich CECOMA/DECOMA dienen, z. B. um über den Eintrag 6 das nächste Kanalbefehlswort zu holen und um über den Eintrag 7 allgemein zugreifen zu können, z. B. zum Abholen des zwischengespeicherten Ein-/Ausgabebefehles.

Im Steuerspeicher MCD ist dagegen für jedes Gerät DEVx nur ein einziger Eintrag vorgesehen, der aus mehreren Steuerkennzeichen besteht, die in Verbindung mit der übergeordneten Steuerung ATU-ST die Verwaltung der Adressentabelle AT und den Zugriff zu dieser steuern. Im einzelnen haben die Steuerkennzeichen folgende Bedeutung :

A : Ein Zeiger zur Kennzeichnung des jeweils aktuellen, zuletzt benutzten Eintrages von den Einträgen 0 bis 5 der Adressentabelle AT. Insgesamt besteht der Zeiger A beispielsweise aus drei Bits, von denen die beiden höherwertigen als Zeiger A' die jeweilige Zweiergruppe je Kanalbefehlswort bezeichnen.

Z : Ein Zeiger aus zwei Bits mit den Werten 0, 1 und 2, der analog dem Zeiger A' die jeweils vom Ein-/Ausgabeprozessor IOP zuletzt erneuerte Zweiergruppe von Einträgen in der Adressentabelle AT kennzeichnet.

US : Ein Steuerbit zur Kennzeichnung des jeweils nicht adressierten anderen Datenfeldeintrages des aktuellen Kanalbefehlswortes als bereits benutzt.

FO : Ein Steuerbit zur Kennzeichnung der beiden auf das aktuelle Kanalbefehlswort im Übergabebereich DECOMA folgenden Kanalbefehlswörter als Anfangspunkte zweier getrennter Programmzweige. Es wird durch den steuernden Prozessor gesetzt, wenn bei der Bereitstellung der DECOMA- und AT-Einträge erkannt wird, daß auf das aktuelle Kanalbefehlswort ein Kanalsprungbefehl (TIC) folgt. Im DECOMA wird dann das durch den Kanalsprungbefehl adressierte Kanalbefehlswort eingetragen.

FL : Ein Steuerbit zur Kennzeichnung der bereits erfolgten Abspeicherung der Gerätenummer DEVx als Nachladeanforderung in einem Anforderungsspeicher FIFO zwecks Vermeidung von Doppelanforderungen.

LF : Ein Steuerbit zur Kennzeichnung der noch nachzuholenden Einspeicherung der Gerätenummer DEVx in den Anforderungsspeicher FIFO.

VA : Ein Gültigkeitsbit, das die Gültigkeit der Einträge 0 bis 6 in der Adressentabelle AT anzeigt, während Eintrag 7 stets gültig ist, damit das Ein-/Ausgabemodul CE jederzeit zum Übergabebereich CECOMA zugreifen kann.

LC : Ein Steuerbit zur Kennzeichnung des durch den Zeiger Z bezeichneten Kanalbefehlswortes als letztes Kanalbefehlswort eines Kanalprogramms.

Alle diese Steuerkennzeichen werden jeweils von der übergeordneten Steuerung ATU-ST gelesen und im Rahmen des Steuerungsablaufes bzw. auf Anforderung vom Ein-/Ausgabeprozessor IOP geändert.

Die Ansteuerung der Adressensteuereinrichtung ATU im Rahmen eines Speicherzugriffes von einem der Ein-/Ausgabemodule CE aus erfolgt in an sich bekannter Weise über das Leitungssystem L-BUS, beispielsweise mit dem im untern Teil von Fig. 3 gezeigten Zugriffsparameter Z-PAR, der sich u. a. aus folgenden Angaben zusammensetzt :

S-PA : Angaben über die Art des Speicherzugriffs (Schreiben oder Lesen) und die Art der Übertragung (z. B. 8 oder 32 Byte), die von der Zuteilungssteuerung BC-L für die Ansteuerung der Adressensteuereinrichtung ATU benötigt werden.

DEVx : Die Nummer des anfordernden Gerätes.

W-AD : Eine vom Bytezähler des Ein-/Ausgabemodules CE ableitbare Teiladresse zur Bildung der reellen Speicherzugriffsadresse MM-AD bei Datenfeldzugriffen bzw. eine Teiladresse zur Kennzeichnung vorgegebener Speicherplätze im Übergabebereich CECOMA/DECOMA.

CONT : Steuerbits zur Kennzeichnung des jeweils maßgeblichen Eintrags in der Adressentabelle AT, abhängig vom Fortgang des Kanalprogramms sowie zur Steuerung vorgegebener Funktionen der übergeordneten Steuerung ATU-ST.

Aufgrund der mitgeteilten Gerätenummer DEVx kann einerseits der zugehörige individuelle Eintrag mit MCD-AD im Steuerspeicher MCD gelesen und der Steuerung ATU-ST übergeben werden. Außerdem kann damit in der Adressentabelle AT der zugehörige Eintragsbereich ausgewählt und der anhand der Steuerbits CONT ermittelte gewünschte Eintrag mit AT-AD gelesen werden. Aus der dadurch erhaltenen reellen Seitenadresse PPAGE ergibt sich dann zusammen mit der angelieferten Teiladresse W-AD unmittelbar die vollständige reelle Speicheradresse MM-AD für den Hauptspeicher MM.

Die Steuerbits CONT, die z. B. vier gleichnamige Bits umfassen, eröffnen beispielsweise folgende Steuerungsmöglichkeiten :

| CONT | ATU-Funktion |
|---|---|
| 000z | Auswahl des Datenfeldeintrags oder Seiteneintrags z = 0 oder 1 des aktuellen Kanalbefehlswortes CCWn in der Adressentabelle AT |
| 100z | Bereits abgearbeiteter (US=1) Datenfeldeintrag z = 0 oder 1 in der Adressentabelle AT darf noch einmal verwendet werden, z.B. bei Wiederholungen eines aktuellen Kanalbefehlswortes, dessen Datenfeld kleiner als 2 Seiten ist. |
| X010 | Auswahl des Datenfeldeintrags z = 0 des nächsten Kanalbefehlswortes CCWn+1 in der Adressentabelle AT |
| X100 | Auswahl des Datenfeldeintrags z = 0 des übernächsten Kanalbefehlswortes CCWn+2 in der Adressentabelle AT |
| 0110 | Lesen des nächsten Kanalbefehlswortes CCWn+1 im zugehörigen Übergabebereich DECOMA mit Seitenadresse aus Eintrag 6 der Adressentabelle AT |
| 1110 | Lesen des übernächsten Kanalbefehlswortes CCWn+2 im zugehörigen Übergabebereich DECOMA mit Seitenadresse aus Eintrag 6 der Adressentabelle AT |
| 0111 | Zugriff beliebig zum Übergabebereich CECOMA mit der Seitenadresse aus Eintrag 7 der Adressentabelle AT |
| 1111 | Zugriff beliebig zum Übergabebereich DECOMA mit Seitenadresse aus Eintrag 6 der Adressentabelle AT |

Anhand der Steuerkombination CONT lassen sich zwei Arten von Adressen für den Hauptspeicher MM bilden, nämlich Adressen für die Ansteuerung von Speicherplätzen beim Datentransfer und Adressen für die Ansteuerung von Speicherplätzen im Übergabebereich CECOMA/DECOMA. Die Adressen für Datenspeicherplätze ergeben sich in einfacher Weise aus der reellen Seitenadresse PPAGE der Adressentabelle AT in Verbindung mit der mitgelieferten Teiladresse W-AD im Zugriffsparameter Z-PAR, die in bekannter Weise vom beim Datentransfer mitlaufenden Bytezähler im Ein-/Ausgabemodul CE abgeleitet werden kann.

Bei der Ansteuerung des Übergabebereiches CECOMA/DECOMA handelt es sich um von den Nummern des jeweiligen Ein-/Ausgabemoduls CEx und des jeweiligen Gerätes DEVx, sowie vom Fortgang der Ein-/Ausgabeoperation abhängige Adressenteile, die entweder vom Modul CEx unmittelbar als vollständiger Adressenteil W-AD im Zugriffsparameter Z-PAR angeliefert werden. Oder aber der Adressenteil W-AD ist zunächst unvollständig und muß erst innerhalb der Adressensteuereinrichtung ATU anhand der dort zur Verfügung stehenden Daten, z. B. der Nummer des Ein-/Ausgabemoduls CEx, umgesetzt und ergänzt werden. Beispielsweise kann aus der Modulnummer und der angelieferten Gerätenummer eine Teilbereichsadresse ermittelt werden, an die eine lokale Adresse, z. B. für das nächste oder übernächste Kanalbefehlswort innerhalb dieses Bereiches, angehängt wird.

Im vorliegenden Fall sei der Einfachheit halber unterstellt, daß das jeweilige Ein-/Ausgabemodul den die reelle Seitenadresse aus der Adressentabelle ergänzenden Adressenteil als Adressenteil W-AD im Zugriffsparameter Z-PAR selbst liefert.

Da andererseits die Auswahl der benötigten reellen Seitenadressen PPAGE in der Adressentabelle AT allein von den Steuerbits CONT abhängig ist, die das jeweils betroffene Ein-/Ausgabemodul CEx entsprechend dem Fortgang eines zugewiesenen Ein-/Ausgabeauftrages in entsprechender Folge nacheinander liefert, ist offensichtlich, daß die einzelnen Module CE von einer Adressensteuerung und -übersetzung im üblichen Sinne weitgehend entlastet sind. Trotzdem werden alle Ein-/Ausgabeoperationen einheitlich anhand virtueller Adressen für Programme und Daten abgewickelt.

Wie aus der Tabelle für die Steuerbits CONT zu ersehen ist, weisen lediglich die letzten vier Bitkombinationen auf einen bestimmten Adresseneintrag in der Adressentabelle AT hin, nämlich auf den Eintrag 6 oder 7, während sich die ersten vier Bitkombinationen auf einen der Einträge 0 bis 5 beziehen. Welcher dieser Einträge aber jeweils zum Zuge kommt, ergibt sich beim gewählten Beispiel aus den mittleren beiden Bits O und N der Steuerbits CONT, die jeweils eines der vier Eintragspaare kennzeichnen. Damit ergibt sich für eine Ein-/Ausgabeoperation beispielsweise folgende Steuerbitfolge :

| CONT | Eintrags-paar | Eintrag | Funktion | | | |
|---|---|---|---|---|---|---|
| 0111 | 3 | 7 | Lesen des E/A-Auftrags | | | |
| 1111 | 3 | 6 | Lesen des ersten Befehls CCWn | | | |
| 0000 | 0 | 0 | Lesen des ersten Datenfeldeintrages | | | |
| 0001 | 0 | 1 | " | " | 2. | " |
| 0000 | 0 | 0 | " | " | 3. | " |
| 0001 | 0 | 0 | " | " | 4. | " |
| ⋮ | ⋮ | ⋮ | ⋮ | ⋮ | ⋮ | ⋮ |
| 0000 | 0 | 0 | " | " | (m-1). | " |
| 0001 | 0 | 1 | " | " | m. | " |
| 0110 | 3 | 6 | " | " | nächsten Befehls CCWn+1 | |
| 0010 | 1 | 2 | " | " | 1. Datenfeldeintrages | |
| 0001 | 1 | 3 | " | " | 2. | " |
| 0000 | 1 | 2 | " | " | 3. | " |
| 0001 | 1 | 3 | " | " | 4. | " |

Da während eines Datentransfers bei jedem Speicherzugriff immer nur ein Bruchteil der durch einen Datenfeldeintrag adressierbaren Daten übertragen wird, erfolgt ein Wechsel von einem Datenfeldeintrag auf den nächsten bekanntlich immer erst beim Überschreiten einer Speicherseite, so daß ein und derselbe Dateneintrag nicht, wie in der vorangehenden Tabelle angegeben, nur jeweils einmal, sondern jeweils mehrfach ausgewählt wird, bis die Seitengrenze tatsächlich erreicht ist.

Die bei Überschreiten einer Seitengrenze bzw. beim Wechsel eines Kanalbefehlswortes notwendig werdenden Eintragsänderungen in der Adressentabelle AT werden von der Steuerung ATU-ST selbständig anhand der im Steuerspeicher MCD enthaltenen Steuerkennzeichen veranlaßt.

Wesentlich sind dabei die beiden Zeiger A und Z, von denen der eine, nämlich A, im vorliegenden Fall entsprechend den je Gerät vorgesehenen sechs Datenfeldeinträgen in der Adressentabelle AT Modulo 6 und der andere, nämlich Z, Modulo 3 zählt, wobei die beiden höchstwertigen Bits des Zeigers A einen Hilfszeiger A' bilden, der analog dem Zeiger Z die gebildeten Paare von Datenfeldeinträgen kennzeichnet. Diese Zeiger sind für die Verwaltung sowohl der Adressentabelle AT als auch des Bereiches für die Kanalbefehlswörter CCW eines Ein-/Ausgabeprogrammes im jeweiligen geräteindividuellen Übergabebereich DECOMA des Hauptspeichers MM maßgebend, was nachfolgend anhand von Fig. 4 und Fig. 5 näher erläutert werden soll.

Fig. 4 nimmt dabei auf die Verwaltung der jeweils acht Einträge in der Adressentabelle AT Bezug, die als Kreissektoren 0 bis 7 einen Kreis bilden. Die dargestellten Kreise sind außerdem in Quadranten unterteilt, die jeweils zwei Kreissektoren umfassen. Einer der Quadranten mit den Einträgen 6 und 7 für den organisatorischen Zugriff ORG und das Holen der Kanalbefehlswörter CCW ist jeweils schraffiert, da er für die Verwaltung der Datenfeldeinträge nicht benötigt wird und diese Einträge während einer Ein-/Ausgabeoperation nicht verändert werden. Den restlichen drei Quadranten sind, wie bereits dargelegt, jeweils zwei Datenfeldeinträge dreier aufeinanderfolgender Kanalbefehlswörter CCW mit den Indizes n, n + 1 und n + 2 zugeordnet. Der Zeiger Z dient dabei der Kennzeichnung des Datenfeldpaares des jeweils letzten bereitgestellten Kanalbefehlswortes, z. B. n + 2/..., während der Zeiger A den jeweils aktuellen Datenfeldeintrag kennzeichnet. Die Abbildung in Fig. 4 links oben stellt für n = 1 den Ausgangszustand nach erstmaliger Ladung durch den steuernden Prozessor IOP dar. Der Zeiger A zeigt daher auf den Datenfeldeintrag O, in dem die erste Seitennummer n/1 zum ersten Kanalbefehlswort CCWn enthalten ist. Der Zeiger Z zeigt dagegen auf das Datenfeldeintragspaar 4/5, in denen die ersten beiden Seitennummern n + 2/1 und n + 2/2 des dritten Kanalbefehlswortes CCWn+ 2 untergebracht sind.

Von diesem Ausgangszustand — durch den Index a der Zeiger gekennzeichnet — ausgehend, sind drei verschiedene Änderungen möglich :

n → n : Beim selben Kanalbefehlswort wird die Datenfeldseite überschritten und es kommt der zweite Eintrag für die Datenfeldseite n/2 zum Zuge.

n → n + 1 : Das Kanalbefehlswort hat auf das nächste der Folge gewechselt.

n → n + 2 : Das Kanalbefehlswort hat auf das übernächste der Folge gewechselt.

In allen Fällen ändert der Zeiger A, wie die Abbildungen der mittleren Spalte von Fig. 4 zeigen, seine Stellung — neuer Index n — und löst dadurch einen Nachladevorgang aus, an dessem Ende sich jeweils die in der rechten Abbildungsspalte dargestellten Zustände ergeben :

n → n : Es muß lediglich die nachfolgende Datenfeldseite n/3 in die frei gewordene Eintragszeile (Kreissektor O) nachgeladen werden. Der Zeiger Z bleibt unverändert.

n → n + 1 : Die für das Kanalbefehlswort CCWn reservierten Eintragszeilen sind frei geworden. Sie werden durch die ersten beiden Datenfeldseiten n + 3/1 und n + 3/2 des nächstfolgenden Kanalbefehlswortes CCWn + 3 ersetzt. Der Zähler Z rückt entsprechend weiter (neuer Index n).

n → n + 2 : Das nächstfolgende Kanalbefehlswort CCWn + 1 wird übersprungen. Dadurch sind die für die Kanalbefehlswörter CCWn und CCWn + 1 reservierten Eintragszeilen frei geworden. Sie werden daher der Reihe nach mit den jeweils ersten beiden Datenfeldseiten für die nachfolgenden Kanalbefehlswörter CCWn + 3 und CCWn + 4 überschrieben. Der Zeiger Z rückt entsprechend weiter vor (neuer Index n).

Diese Dreiteilung hat zudem den großen Vorteil, daß die in bekannten Rechnerarchitekturen bei Befehlskettungen erlaubte bedingte Verzweigung auf das übernächste Kanalbefehlswort anstelle des nächsten in gleicher Weise wirkungsvoll unterstützt wird.

Fig. 5 zeigt das der Fig. 4 entsprechende Gegenstück für die gleichlaufende Bereitstellung der Kanalbefehlswörter im Übergabebereich DECOMA anhand der Zeiger Z und A', wobei der Zeiger A' z. B. von den beiden höchstwertigen Bits des Zeigers A abgeleitet ist, da nicht Datenfeldeinträge, sondern die den Paaren von Datenfeldeinträgen zugehörigen Kanalbefehlswörter verwaltet werden. In jedem geräteindividuellen Bereich DECOMA sind drei fest vorgegebene, z. B. durch den Zeiger A' als Adressenteil unterscheidbare Abschnitte für die drei bereitzustellenden Kanalbefehlswörter, nämlich die Kanalbefehlswörter CCWn, CCWn + 1 und CCWn + 2 , vorgesehen. Dieser Ausgangszustand ist in Fig. 5 links oben dargestellt. Der Zeiger A' kennzeichnet dabei das jeweils aktuelle Kanalbefehlswort, das gerade bearbeitet wird, und der Zeiger Z wiederum das jeweils als letztes bereitgestellte Kanalbefehlswort.

Anhand der aus dem Steuerspeicher MCD der Adressensteuerungseinrichtung ATU für ein vorgegebenes Gerät DEVx zur Verfügung stehenden beiden Zeiger A und Z kann der steuernde Prozessor IOP nach Erhalt einer Ladeanforderung daher in einfacher Weise feststellen,

ob nur eine Seitennummer für das aktuelle Kanalbefehlswort nachzuladen ist, nämlich wenn die Bedingung Z = A' + 2 oder LC = 1 erfüllt ist,

ob ein Kanalbefehlswortwechsel stattgefunden hat und daher ein Kanalbefehlswort oder zwei Kanalbefehlswörter vorzubereiten sind, nämlich bei Erfüllung der Bedingung LC = O und Z = A' + 1 bzw. Z = A', oder

ob ein Kanalbefehlswortwechsel stattgefunden hat und für das neue Kanalbefehlswort bereits eine Seitennummer einzutragen ist, nämlich wenn die Bedingung Z = A' + 2 erfüllt ist und der Zeiger A bereits den zweiten Datenfeldeintrag des zugehörigen Paares kennzeichnet.

Durch diesen Gleichlauf der Verwaltung anhand derselben zyklischen Zeiger ergeben sich sehr einfache Zuordnungsbedingungen, die leicht zu handhaben sind und einen verhältnismäßig einfachen Steuerungsablauf bedingen.

Unter der Voraussetzung, daß jeder Übergabebereich CECOMA mit den zugehörigen geräteindividuellen Bereichen DECOMAx sich auf derselben Speicherseite befinden, wird für die Einträge 6 und 7 lediglich eine für diesen Bereich feste Seitenadresse benötigt, die durch Ergänzung abhängig von der Gerätenummer DEVx den zugehörigen Bereich DECOMAx festlegt und durch weitere Ergänzung die z. B. 32 Worte eines Bereichs DECOMAx einzeln ansteuern läßt.

Die zweite Ergänzung ist bei beliebigem Zugriff zum Übergabebereich DECOMAx durch die vom Zugriffsparameter Z-PAR gelieferte Teiladresse W-AD bestimmt und beim Lesen des nächsten oder übernächsten Kanalbefehlswortes von den Steuerbits CONT und dem Zeiger A' abhängig, so daß entsprechend der Zählweise des Zeigers A' drei Speicherbereiche für die drei Kanalbefehlswörter CCW mit den zugehörigen Daten CCW-DAT zyklisch nacheinander angesteuert werden können.

Entsprechend dem in Fig. 6A und B gezeigten Flußdiagramm ergibt sich damit für die Steuerung ATU-ST in der Adressensteuereinrichtung ATU bei deren Ansteuerung über das Leitungssystem L-BUS mit dem Steuerparameter Z-PAR folgender Arbeitsablauf :

Zunächst wird gegebenenfalls anhand von zusätzlichen Sicherungsinformationen geprüft, ob ein Zugriff zum Hauptspeicher überhaupt erlaubt ist. Ist die Sicherungsinformation, z. B. falscher Code oder nicht vergebene Gerätenummer, falsch, wird mit dem Signal END1 eine Fehlermeldung an das zuständige Modul CE abgesetzt und der steuernde Prozessor IOP entsprechend benachrichtigt.

Im anderen Falle wird anhand der mitgeteilten Gerätenummer DEVx der zugehörige Eintrag im Steuerspeicher MCD gelesen. Weiterhin wird anhand der Steuerbits CONT geprüft, ob der Eintrag $E_7$ in der Adressentabelle AT für einen allgemeinen organisatorischen Zugriff im Übergabebereich CECOMA anzusteuern ist, und dieser Eintrag gegebenenfalls aus der Adressentabelle gelesen.

Ist die Prüfung negativ, wird zunächst das Gültigkeitsbit VA des aus dem Steuerspeicher MCD gelesenen Eintrages geprüft. Durch Beschränkung der Gültigkeitsprüfung auf Zugriffe zu den Einträgen $E_{0\text{-}6}$ wird sichergestellt, daß die Ein-/Ausgabemodule CE jederzeit Informationen mit dem zugehörigen Übergabebereich CECOMA austauschen können. Lediglich durch einen ungültigen Eintrag $E_7$ (V = 0) in der Adressentabelle AT kann dieser Zugriff unterbunden werden. Dagegen ist ein Zugriff zu den übrigen Einträgen $E_{0\text{-}6}$ der Adressentabelle AT nur bei einem gültigen Eintrag im Steuerspeicher MCD möglich. In jedem Falle führen ungültige Einträge im Steuerspeicher MCD und in der Adressentabelle AT mit dem Signal END2 zu einer Fehlermeldung an das jeweilige Ein-/Ausgabemodul CE.

Bei gültigem Eintrag im Steuerspeicher MCD (VA = 1) wird zunächst geprüft, ob durch die Steuerbits CONT der Eintrag $E_6$ in der Adressentabelle AT gekennzeichmet ist. Dabei kann es sich um einen beliebigen Zugriff, z. B. Lesen des ersten Kanalbefehlswortes, oder um das Lesen des nächsten oder im Falle einer Verzweigung des übernächsten Kanalbefehlswortes des Ein-/Ausgabeprogramms handeln.

Wird ein beliebiger Zugriff angefordert, kann der Eintrag $E_6$ in der Adressentabelle AT sofort gelesen werden. In den beiden anderen Fällen ist zunächst zu prüfen, ob das benötigte Kanalbefehlswort im Übergabebereich bereits bereitgestellt ist. Dies wird anhand der Zeiger A' und Z überprüft. Ist die Bedingung A' ≠ Z gegeben, dann steht wenigstens das nächste Kanalbefehlswort, und ist die Bedingung A'+ 2 = Z erfüllt, dann steht auch das übernächste Kanalbefehlswort zur Verfügung, und der Eintrag $E_6$ in der Adressentabelle AT kann gelesen werden.

Bei negativen Prüfergebnissen wird mit dem Signal END 5/6 eine entsprechende Fehlermeldung an das jeweilige Ein-/Ausgabemodul CE abgesetzt und gegebenenfalls eine Ladeanforderung ausgelöst, allerdings nur dann, wenn nicht bereits das letzte Kanalbefehlswort eines Kanalprogramms erreicht ist (LC = 1) oder wenn nicht bereits eine Ladeanforderung gespeichert ist (FL = 1).

Wird nicht der Eintrag $E_6$ gewünscht, so handelt es sich um einen der Einträge $E_0$ bis $E_5$ (Fig. 6B). In diesem Fall muß der gewünschte Eintrag auch bereitgestellt sein, was wiederum anhand der Zeiger A und Z überprüft wird, da — wie bereits anhand von Fig. 4 erläutert worden ist — ein Eintrag nur zugänglich ist, wenn er im durch die Zeiger A' und Z angezeigten gültigen Bereich liegt.

Ist der gewünschte Eintrag noch nicht nachgeladen, dann ergeht mit dem Signal END3 wiederum eine entsprechende Mitteilung an das betreffende Ein-/Ausgabemodul CE, und es wird eine Nachladeanforderung ausgelöst. Im anderen Falle wird außerdem geprüft, ob eine Wiederholanforderung (RETRY) vorliegt oder ob der gewünschte Eintrag gleich dem durch den Zeiger gekennzeichneten Eintrag ist, z. B. bei wiederholtem Ansteuern eines Datenfeldeintrages. Ist eine dieser beiden Bedingungen erfüllt, dann kann der Eintrag sofort aus der Adressentabelle AT gelesen werden.

Ist dies nicht der Fall, ist zu prüfen, ob der gewünschte Eintrag zu der durch den abgeleiteten Zeiger A' gekennzeichneten Zweiergruppe, also zum selben Kanalbefehlswort, gehört. Trifft letzteres zu, handelt es sich nur um einen Wechsel des Datenfeldeintrags zum selben Kanalbefehlswort und es könnte der Datenfeldeintrag gegebenenfalls bereits benutzt sein (US = 1), so daß die Bereitstellung des gewünschten Eintrages erst abgewartet werden muß, was mit dem Signal END3, wie oben bereits erläutert, gemeldet wird. Bei nicht bereits benutztem Datenfeldeintrag kann dagegen bei gleichzeitiger Kennzeichnung der Benutzung ($US \rightarrow 1$) und Anpassung des Zeigerstandes ($A \rightarrow E_{0\text{-}5}$) der Eintrag in der Adressentabelle AT gelesen werden.

Gehört der gewünschte Eintrag nicht zu der vom Zeiger 5 A' gekennzeichneten Zweiergruppe ($E_{0\text{-}5}' \neq A'$), dann liegt ein Wechsel des Kanalbefehlswortes vor. Erfolgt dieser Wechsel von einem Kanalbefehlswort aus, dessen nächstes und übernächstes Kanalbefehlswort die Anfangspunkte zweier getrennter Programmzweige sind (FO = 1), dann wird durch Einstellung des Zeigers Z auf den gewünschten Eintrag $E_{0\text{-}5}'$ der Ausgangspunkt für das Nachladen in dem maßgebenden Befehlszweig ($Z \rightarrow E_{0\text{-}5}'$) neu festgelegt und der Verzweigungshinweis aufgehoben ($FO \rightarrow 0$). Da es sich in diesem Fall immer um den ersten Datenfeldeintrag eines Paares handelt, wird auch der gegebenenfalls gesetzte Merker US auf O gesetzt. Letzteres gilt auch, wenn keine Verzweigung vorliegt ($FO \neq 1$). Anschließend wird dann in beiden Fällen der Zeiger A auf den gewünschten Eintrag $E_{0\text{-}5}$ eingestellt und der Eintrag in der Adressentabelle AT gelesen.

Unabhängig davon, welcher der Einträge in der Adressentabelle AT gelesen wurde, wird zunächst in dem gelesenen Eintrag das Gültigkeitskennzeichen V, und falls der Eintrag gültig ist, die Kennung F für einen Fehlervermerk überprüft. Nur ein gültiger und fehlerhinweisfreier Eintrag wird zur Bildung der Speicheradresse MM-AD und damit zur Ansteuerung des Hauptspeichers MM freigegeben.

Bevor jedoch nach Freigabe der Speicheradresse MM-AD der mit einer Ansteuerung ausgelöste Arbeitszyklus der Steuerung ATU-ST beendet werden kann, müssen noch die jeweils aufgetretenen Ladeanforderungen berücksichtigt werden, wobei alle bestehenden Ladeanforderungen für den steuernden Prozessor IOP durch Einschreiben der jeweiligen Geräteadresse DEVx in einen Anforderungsspeicher FIFO der Steuerung ATU-ST gesteuert werden und das bereits erfolgte Einspeichern in der geräteindividuellen Eintragszeile des Steuerspeichers MCD durch das gesetzte Steuerungskennzeichen FL markiert wird, so daß jedes Gerät nur einmal in den Anforderungsspeicher FIFO eingetragen werden kann.

Nach der Freigabe der Speicheradresse MM-AD wird daher zunächst überprüft, ob die Bedingung FL = 1 gegeten ist. Ist dies der Fall, dann ist bereits eine Anforderung abgespeichert und der laufende Arbeitszyklus kann abgebrochen werden, da Doppelabspeicherungen voraussetzungsgemäß nicht vorgenommen werden.

Ist noch keine Nachladeanforderung abgespeichert, wird geprüft, ob das Steuerkennzeichen LF im Steuerspeicher MCD eine noch nicht berücksichtigte Anforderung anzeigt. Aber auch bei der Bedingung LF = 0 kann sich eine Anforderung für einen neuen Datenfeldeintrag ergeben, falls es sich um einen Zugriff zu den Einträgen $E_0$ bis $E_5$ handelt und folgende Bedingungen erfüllt sind :

a) Es hat ein Wechsel des Kanalbefehls stattgefunden ($E_{0\text{-}5}' = A'_{alt}$) — $A'_{alt}$ kennzeichnet den zu Beginn eines Zugriffs gelesenen und zwischengespeicherten Zeigerstand — und es sind noch weitere Kanalbefehlswörter nachzuladen (LC = 0).

b) Es hat kein Wechsel des Kanalbefehlswortes stattgefunden ($E_{0\text{-}5}' = A'_{alt}$) und es liegt weder eine Wiederholungsanforderung (RETRY) noch eine Benutzung desselben Datenfeldeintrages ($E_{0\text{-}5} = A_{alt}$) vor, noch ist der letzte Datenfeldeintrag eines Kanalbefehlswortes (L = 1) erreicht.

Alle Anforderungen werden aber nur berücksichtigt, wenn der Anforderungsspeicher FIFO nicht voll ist. Der Speicher wird dann mit der Geräteadresse DEVx geladen. Außerdem wird im Steuerspeicher MCD das zugehörige Steuerkennzeichen FL auf 1 und das Steuerkennzeichen LF auf O gesetzt. Ist der Speicher dagegen bereits voll, dann wird das Steuerkennzeichen LF zur Kennzeichnung einer noch nicht abgespeicherten Anforderung auf 1 gesetzt, als Zeichen dafür, daß die Anforderung in einem der nachfolgenden Arbeitszyklen der Steuerung ATU-ST noch in den Anforderungsspeicher zu übertragen ist.

Wie bereits erläutert, lädt der steuernde Prozessor IOP erstmalig während der Einleitungsphase eines Ein-/Ausgabeauftrages die ersten drei Kanalbefehlswörter eines Kanalprogrammes mit den zugehörigen Daten CCW-DAT in den Übergabebereich DECOMAx des betroffenen Gerätes DEVx und trägt zu jedem bereitgestellten Kanalbefehlswort die ersten beiden Datenfeldeinträge mit den Steuerkennzeichen in die Adressentabelle AT der Adressensteuerungseinrichtung ATU ein. Außerdem werden im Steuerspeicher MCD die zugehörigen Zeiger und Steuerbits gesetzt. Die Ermittlung der reellen Seitennummer für die Datenfeldeinträge erfolgt dabei ebenfalls anhand von Umsetzungstabellen in gleicher und an sich bekannter Weise wie die Ermittlung der reellen Seitenadressen für die Kanalbefehlswörter aus den durch das Kanalprogramm bereitgestellten virtuellen Adressen, wobei aus der Adresse für das erste Datenwort und dem Bytezähler im Kanalbefehlswort in bekannter Weise abgeleitet wird, welche und wieviele virtuellen Seitennummern nacheinander zu übersetzen sind. Außerdem wird zum Beispiel in den zugehörigen Organisationsdaten CCW-DAT vermerkt, wieviele Seitennummern bereits übersetzt und in die Adressentabelle AT der Adressensteuerungseinrichtung ATU eingetragen sind. Kanalsprungbefehle (TIC) werden dabei vom steuernden Prozessor IOP sofort bearbeitet, indem anstelle eines solchen Kanalbefehles jeweils das durch diesen adressierte Kanalbefehlswort in den Übergabebereich DECOMAx eingetragen wird, wobei das dem Kanalsprungbefehl jeweils vorangehende Kanalbefehlswort als Verzweigungspunkt des Kanalprogramms in den Organisationsdaten gekennzeichnet wird.

Im weiteren Verlauf eines Ein-/Ausgabeauftrages wird der steuernde Prozessor IOP jeweils durch eine Ladeanforderung LOREQ der Adressensteuerungseinrichtung ATU zum Nachladen des Übergabebereiches DECOMA und/oder der Adressentabelle AT veranlaßt, wobei die Ladeanforderung automatisch gestellt wird, sobald eine Gerätenummer DEVx in den Anforderungsspeicher FIFO eingespeichert ist.

Die sich daraus ergebende Arbeitsweise des steuernden Prozessors IOP sei nachfolgend anhand des Flußdiagramms von Fig. 7A und 7B näher erläutert :

Aufgrund einer vom steuernden Prozessor IOP festgestellten Ladeanforderung LOREO wird zunächst die Gerätenummer DEVx aus dem Anforderungsspeicher FIFO, der nach dem « first-in-firstout »-Prinzip arbeitet, gelesen und damit der Steuerspeicher MCD angesteuert. Ist das Gültigkeitsbit VA gesetzt, wird vom Prozessor IOP geprüft, ob nur eine Datenfeldseitennummer in die Adressentabelle nachzuladen ist oder ob ein Wechsel des Kanalbefehlswortes stattgefunden hat und wenigstens ein weiteres Kanalbefehlswort in den zugehörigen Übergabebereich DECOMAx einzutragen ist. Eine Ladeanforderung aufgrund eines Wechsels des Kanalbefehlswortes kann voraussetzungsgemäß — man siehe Fig. 4 und Fig. 5 — nicht erfolgt sein, wenn die Bedingung $Z = A' + 2$ noch erfüllt ist oder wenn bereits das letzte Kanalbefehlswort bereitgestellt ist ($LC = 1$). Es ist dann nur eine neue Datenfeldseitennummer in die Adressentabelle AT einzutragen, vorausgesetzt, daß einer der beiden Seitennummerneinträge des Kanalbefehlswortes bereits benutzt ist, also die Bedingung $US = 1$ erfüllt ist.

Sind die genannten Bedingungen erfüllt, werden im zugehörigen Übergabebereich DECOMAx, dessen Adresse aus der Gerätenummer DEVx ableitbar ist, die dem Zeiger A' entsprechenden Einträge für das aktuelle Kanalbefehlswort CCWn und die zugehörigen Organisationsdaten CCW-DATn gelesen. Anhand der damit vorliegenden Angaben wird dann die neue Seitennummer PPAGE des zugehörigen Datenfeldes berechnet und zusammen mit den Steuerkennzeichen V, F und L in die Adressentabelle AT der Adressensteuereinrichtung ATU eingetragen, und zwar jeweils in den vom Zeiger A ableitbaren freien Eintragsabschnitt des durch die Gerätenummer DEVx und den Zeiger A' gekennzeichneten Eintragspaares.

Nach jedem Eintrag wird zur Kontrolle der zugehörige Eintrag im Steuerspeicher MCD nochmals gelesen und geprüft, ob sich der Zeiger A' inzwischen verändert hat, weil zwischenzeitlich ein Wechsel des Kanalbefehlswortes erfolgt ist. Nur bei unverändertem Zeiger A' dürfen die Steuerbits US und FL gelöscht werden.

Hat sich dagegen der Zeiger A' inzwischen verändert und ist demzufolge der neue Seiteneintrag übersprungen worden, so ist dies in bekannten Rechnerarchitekturen nur zulässig, wenn eine Seite nicht bis zum Ende des letzten Bytes abzuarbeiten war und die Steueranzeige « falsche Länge » unterdrückt war ($SLI = 1$) — man siehe Siemens Druckschrift D 15/5104-04 « Zentraleinheiten Siemens System 7 500 und 7 700 — Beschreibung und Befehlsliste », insbesondere Seiten 12-14 bis 12-20. In diesem Falle wird in die noch zu beschreibende, im rechten Teil von Fig. 7A dargestellte Nachladeanforderung für ein neues Kanalbefehlswort übergeleitet.

Die mit den Zweigen EX1 bis 3 ausgelösten Beendigungen einer Nachladeanforderung im linken Teil von Fig. 7A treten im Normalfall nicht auf, da bei ungültigem Eintrag im Steuerspeicher MCD oder bei unverbrauchten Einträgen in der Adressentabelle bzw. bei einem vorzeitigen Überspringen einer Seite, ohne daß der Merker SLI gesetzt ist, normalerweise keine Nachladeanforderung ausgelöst werden kann bzw. ein fehlerhafter Betriebsablauf gegeben ist.

Ergibt die Prüfung, daß ein Wechsel des Kanalbefehlswortes stattgefunden hat ($Z \neq A' + 2$), dann besteht zudem die Möglichkeit, daß wegen des möglichen Zeitverzugs bei der Bearbeitung einer Anforderung auch bereits ein neuer Datenfeldeintrag bereitgestellt werden muß. Dies wird — falls notwendig — zuerst ausgeführt. Anhand des Zeigers A wird daher zunächst geprüft, ob dessen niedrigwertigstes Bit in Form einer « 1 » auf den zweiten Eintrag des Paares A' hinweist. Trifft dies nicht zu, entfällt das Nachladen einer neuen Datenfeldseitennummer zum aktuellen Kanalbefehlswort CCWn.

Im anderen Falle wird der durch den Zeiger A gekennzeichnete Eintrag in der Adressentabelle gelesen und geprüft, ob er nicht bereits die letzte Seitennummer des Datenfeldes enthält ($L = 1$). Ist diese Bedingung erfüllt, braucht ebenfalls keine neue Seitennummer nachgeladen zu werden.

Ist aufgrund dieser Prüfungen eine neue Seitennummer nachzuladen, dann wird nach den bereits zuvor gelesenen Organisationsdaten CCW-DATn auch das zugehörige Kanalbefehlswort CCWn anhand des Zeigers A' aus dem zugehörigen Übergabebereich DECOMAx gelesen und — wie bereits erläutert — die neue Seitennummer berechnet und zusammen mit den Steuerkennzeichen V, F und L in den freien zugehörigen Abschnitt der Adressentabelle AT eingetragen.

Unabhängig davon, ob eine Seitennummer nachzuladen war oder nicht, wird auch in diesem Falle der Steuerspeicher MCD mit der Gerätenummer DEVx erneut gelesen und geprüft, ob sich der Zeiger A zwischenzeitlich geändert hat, weil ein neuer Seiteneintrag erforderlich geworden ist oder aber ein weiterer Wechsel des Kanalbefehlswortes erfolgt ist, so daß mit den neuen Werten aus dem Steuerspeicher MCD die Prüfung von vorne zu beginnen ist.

Andernfalls werden wie bei einem neuen Seiteneintrag die Steuerkennzeichen US und FL zurückgesetzt und anhand der bereits gelesenen Organisationsdaten CCW-DATn geprüft, ob das zugehörige Kanalbefehlswort als Verzweigungspunkt gekennzeichnet ist, da dann das die Verzweigung anzeigende Steuerkennzeichen FO im Steuerspeicher MCD zu setzen ist.

Anschließend wird, wie in Fig. 7B dargestellt, geprüft, ob nur ein weiteres oder aber zwei weitere Kanalbefehlswörter nachgeladen werden müssen. Hat der Zeiger A' den Zeiger Z eingeholt, sind zwei Kanalbefehlswörter nachzuladen. Die virtuelle Adresse des nächsten Kanalbefehlswortes CCWn + 1 ergibt sich dabei in einfacher Weise aus der um einen Distanzbetrag N erhöhten virtuellen Adresse des gegenwärtig durch den Zeiger A' gekennzeichneten Kanalbefehlswortes CCWn, die in an sich bekannter Weise vom steuernden Prozessor IOP übersetzt wird. Ist das neue Kanalbefehlswort CCWn + 1 ein Kanalsprungbefehl TIC, dann wird das durch diesen adressierte Kanalbefehlswort CCWn + 1' gelesen und das Steuerbit FO im Steuerspeicher MCD zur Kennzeichnung des Kanalbefehlswortes CCWn als Verzweigungspunkt gesetzt. Außerdem werden anhand des gelesenen neuen Befehlswortes CCWn + 1 bzw. CCWn + 1' die für die Einträge im Übergabebereich DECOMA und in der Adressentabelle AT erforderlichen Daten ermittelt und jeweils in den durch den Zeigerwert (A' + 1) vorgegebebenen Bereich eingetragen.

Ist damit das Ende des laufenden Kanalprogrammes erreicht, dann wird der Zeiger Z auf den Wert (A' + 1) gebracht und im Steuerspeicher MCD der Merker LC gesetzt. Die Nachladeanforderung an den steuernden Prozessor IOP ist damit von diesem erledigt.

Ist dagegen das Programmende noch nicht erreicht, oder hat die Eingangsprüfung ergeben, daß nur ein Kanalbefehlswort, nämlich das übernächste CCWn + 2, nachzuladen ist, dann wird ausgehend von der virtuellen Adresse für das Kanalbefehlswort CCWn durch Erhöhung um die zweifache Distanzadresse 2N die benötigte Adresse ermittelt und das Kanalbefehlswort CCWn + 2 gelesen. Auch dieses Kanalbefehlswort wird daraufhin geprüft, ob es ein Kanalsprungbefehl ist und gebenenfalls das durch diesen adressierte Kanalbefehlswort CCWn + 2' gelesen werden muß.

Abweichend vom vorhergehende beschriebenen Ablauf wird jedoch nicht einfach das Verzweigungskennzeichen FO gesetzt, denn es könnte schon in Verbindung mit den beiden vorhergehenden Kanalbefehlswörtern CCWn und CCWn + 1 gesetzt sein. Dies wird daher überprüft und abhängig vom Ergebnis, nämlich wenn der Merker FO noch nicht gesetzt ist, das vorhergehende Kanalbefehlswort CCWn + 1 im Übergabebereich DECOMA als Verzweigungspunkt gekennzeichnet, so daß bei der Behandlung einer nachfolgenden Nachladeanforderung für das Kanalbefehlswort CCWn + 3 automatisch, wie bereits beschrieben, das Verzweigungsbit FO erst dann gesetzt wird und voraussetzungsgemäß die Bereitstellung der Anfangsbefehle der beiden möglichen Zweige des Programms kennzeichnet.

Anschließend werden wie bei der Bereitstellung des Kanalbefehlswortes CCWn + 1 die für die neuen Einträge benötigten Werte ermittelt und die Einträge im Übergabebereich DECOMA und in der Adressentabelle AT für den durch den Zeigerwert (A' + 2) gekennzeichneten Bereich vorgenommen. Anschließend wird der Zeiger Z auf den Wert (A' + 2) gebracht und im Falle des Programmendes auch der Merker LC gesetzt.

Während des Bestehens und der Bearbeitung von Nachladeanforderungen durch den steuernden Prozessor IOP werden Zugriffe der Ein-/Ausgabemodule CE zu den Befehlsworteinträgen des Übergabebereiches DECOMA und den Einträgen der Adressentabelle AT in der Adressensteuerung ATU, die gerade nachgeladen werden oder noch nachzuladen sind, in einfacher Weise dadurch verhindert, daß die Steuerkennzeichen, wie z. B. US und Z, im Steuerspeicher MCD jeweils erst am Ende eines Nachladevorganges auf den dann gültigen Zustand eingestellt werden, so daß wie bereits anhand von Fig. 6A und 6B erläutert, Anfragen der Module CE gegebenenfalls vorübergehend abgewiesen werden, wenn die gewünschten Einträge noch nicht bereitgestellt sind.

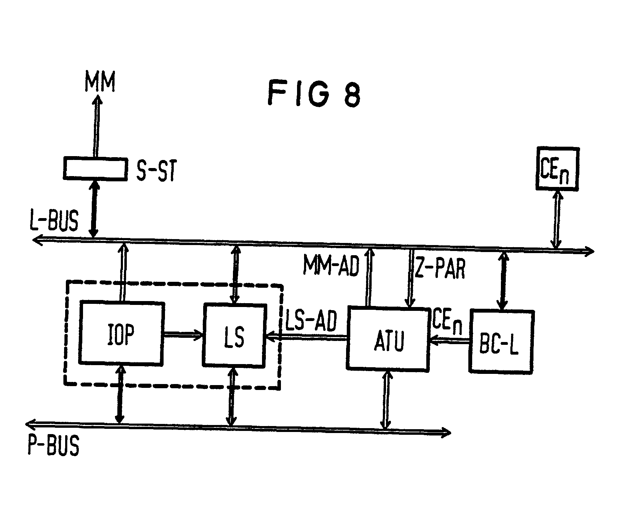

Bei den bisher beschriebenen Ausführungsbeispielen war, wie in Fig. 1 und 2 angedeutet, davon ausgegangen worden, daß die für die Abwicklung von Ein-/Ausgabeaufträgen und zur Zwischenspeicherung der zugehörigen Steuerdaten benötigten Übergabebereiche CECOMA/DECOMA im Hauptspeicher MM eingerichtet sind. Stattdessen können auch vorgegebene Speicherbereiche eines mit dem steuernden Prozessor IOP gekoppelten lokalen Speichers LS verwendet werden, wie Fig. 8 in Anlehnung an Fig. 2 zeigt.

In diesem Falle werden in der Adressentabelle von Fig. 3 je Gerät DEVx jeweils nur sechs Einträge für jeweils zwei Datenfeldeinträge dreier aufeinanderfolgender Kanalbefehlswörter benötigt, während die Einträge $E_6$ und $E_7$ für organisatorische Zugriffe entfallen können. Derartige aus den Steuerbits CONT im Zugriffsparameter Z-PAR erkennbare Zugriffe werden vielmehr unmitteltar in Zugriffsadressen LS-AD für den lokalen Speicher LS umgesetzt, indem wiederum zum Beispiel aus den Nummern des anfordernden Gerätes DEVx und des zugehörigen Ein-/Ausgabemoduls CEn Bereichsadressen gebildet werden, die dann entsprechend durch Distanzadressen, beispielsweise anhand des Zeigers A' in gleicher Weise wie bei der Ableitung der Adressen MM-AD für den Hauptspeicher MM ergänzt werden, nur daß in diesem Falle keine aus der Adressentabelle AT gelesene Seitennummer vorausgeht.

Auch eine verteilte Anordnung der Übergabebereiche CECOMA/DECOMA sowohl im Hauptspeicher MM als auch im lokalen Speicher LS ist ohne weiteres möglich, ohne daß das der Erfindung zugrundeliegende Prinzip dadurch verlassen wird. Beispielsweise können die Übergabebereiche für im Blockmultiplexbetrieb arbeitende Ein-/Ausgabemodule im lokalen Speicher LS und die für im Bytemultiplexbetrieb arbeitenden Module im Hauptspeicher MM untergebracht sein.

Bei den bisher beschriebenen Ausführungsbeispielen wurde angenommen, daß jedem peripheren Gerät DEV in der Adressentabelle AT eine Gruppe von acht bzw. sechs Einträgen und ein Bereich DECOMA fest zugeordnet ist. Dies erfordert aber bei einer großen Anzahl von peripheren Geräten einen entsprechend hohen Speicheraufwand. Dieser läßt sich verringern, wenn man im Übergabebereich CECOMA und in der Adressentabelle AT jeweils nur eine vorgegebene Anzahl von gerätespezifischen Bereichen DECOMA bzw. von Eintragssätzen vorsieht, von denen jeweils erst bei Initierung eines Gerätes ein freier Bereich und Eintragssastz dem Gerät für die Dauer der E/A-Operation zugeordnet wird. Diese Zuordnung trifft in an sich bekannter Weise der steuernde Prozessor, was dann in der Adressensteuerungseinrichtung ATU zu berücksichtigen ist.

Um dabei sicherzustellen, daß ein Ein-/Ausgabemodul CE bei Unterbringung des Übergabebereiches CECOMA im Hauptspeicher MM auch dann zu diesem zugreifen kann, wenn keines der angeschlossenen Geräte DEV initiert ist, wird jedoch jeweils einem vorgegebenen Gerät eines jeden Moduls CE wenigstens ein Eintrag oder ein vollständiger Eintragssatz in der Adressentabelle fest zugeordnet.

Analoges gilt wahlweise auch bezüglich des Steuerspeichers MCD.

**Patentansprüche**

1. Verfahren zum zeitgerechten Bereitstellen von reellen Speicheradressen (MM-AD) für den direkten Zugriff zum Hauptspeicher (MM) durch periphere Geräte (DEV) in einer Datenverarbeitungsanlage, bestehend

aus einem Hauptspeicher (MM) mit Zugriffsteuerung (S-BUS/BC-S) für verschiedene Funktionseinheiten (z. B. für CPU, IOP),

aus einem gesonderten Ein-/Ausgabeleitungssystem (L-BUS/BC-L) mit wenigstens einem daran angeschlossenen weitgehend selbständig arbeitenden Ein-/Ausgabemodul (CE...) mit angeschlossenen peripheren Geräten (DEV),

aus einer Schnittstellensteuerung (S-ST) zur unmittelbaren Kopplung des Ein-/Ausgabeleitungssystems (L-BUS/BC-L) mit der Zugriffsteuerung (S-BUS/BC-S) des Hauptspeichers (MM) und

aus einem sowohl mit der Zugriffsteuerung (S-BUS/BC-S) des Hauptspeichers (MM) als auch mit dem gesonderten Ein-/Ausgabeleitungssystem (L-BUS/BC-L) koppelbaren Prozessor (z. B. IOP) zur Unterstützung der von den Ein-/Ausgabemodulen (CE) durchzuführenden Ein-/Ausgabeoperationen, dadurch gekennzeichnet,

daß die einer vorgegebenen Anzahl von virtuellen Speicheradressen eines Ein-/Ausgabeprogrammes entsprechenden reellen Adressenteile (z. B. Seitennummern PPAGE) für jede Ein-/Ausgabeoperation vom unterstützenden Prozessor (IOP) jeweils im Voraus einer mit dem Ein-/Ausgabeleitungssystem (L-BUS/BC-L) gekoppelten gesonderten Adressensteuerungseinrichtung (ATU) zur Verfügung gestellt werden,

daß bei jedem von einem peripheren Gerät (DEV) gewünschten Zugriff zum Hauptspeicher (MM) die gesonderte Adressensteuereinrichtung (ATU) gezielt angesteuert wird,

daß anhand von dabei mitgeteilten Steuerparametern (Z-PAR) jeweils die dem Fortgang der Ein-/Ausgabeoperation entsprechende reelle Speicheradresse (MM-AD) ermittelt und der Schnittstellensteuerung (S-ST) zur Kopplung des Ein-/Ausgabeleitungssystem (L-BUS/BC-L) mit der Zugriffsteuerung (S-BUS/BC-S) des Hauptspeichers (MM) zur Verfügung gestellt wird und

daß infolge des Fortgangs der Ein-/Ausgabeoperation nicht mehr benötigte reelle Adressenteile auf Anforderung der gesonderten Adressensteuerungseinrichtung (ATU) fortlaufend vom unterstützenden Prozessor (IOP) durch nachfolgend benötigte reelle Adressenteile ersetzt werden.

2. Verfahren nach Anspruch 1, dadurch gekennzeichnet, daß in einem dem peripheren Gerät (DEV) zugeordneten Übergabebereich (DECOMA) eines Speichers (z. B. MM) zu Beginn einer Ein-/Ausgabeoperation vom unterstützenden Prozessor (z. B. IOP) eine vorgegebene Anzahl (z. B. 3) von Kanalbefehlswörtern (z. B. CCWn bis CCWn + 2) mit den zugehörigen Organisationsdaten (CCW-DATn bis CCW-DATn + 2) bereitgestellt wird, daß für jedes bereitgestellte Kanalbefehlswort (CCW...) jeweils eine vorgegebene Anzahl (z. B. 2) von reellen Seitennummern für nacheinander bei der Ausführung des Kanalbefehlswortes anzusteuernde Datenfelder im Hauptspeicher (MM) ermittelt wird, daß die reellen Seitennummern in gleicher Folge in eine Adressentabelle (AT) der Adressensteuerungseinrichtung (ATU) eingespeichert werden und daß mit jedem Wechsel eines Kanalbefehlswortes im Rahmen eines Ein-/Ausgabevorganges das ausgeführte Kanalbefehlswort durch das nachfolgend benötigte in zyklischer Folge ersetzt und die betroffenen alten Seiteneinträge in der Adressentabelle (AT) durch die neuen Seiteneinträge ersetzt werden.

3. Verfahren nach Anspruch 2, dadurch gekennzeichnet, daß bei Verwendung von Speicherbereichen des Hauptspeichers (MM) als Übergabereiche (CECOMA/DECOMA) in der Adressentabelle (AT) der Adressensteuerungseinrichtung (ATU) je Gerät (z. B. DEVx) wenigstens ein zusätzlicher Eintrag für die Ansteuerung des Übergabebereichs im Hauptspeicher (MM) verwendet wird, damit bereitgestellte Kanalbefehlswörter (CCW...) oder sonstige Steuerdaten von den peripheren Geräten (DEV) ebenfalls in direktem Zugriff vom Hauptspeicher (MM) abgeholt werden können.

4. Verfahren nach einem der Ansprüche 2 oder 3, dadurch gekennzeichnet, daß die Belegung des geräteindividuellen Übergabebereiches (DECOMA) mit Kanalbefehlswörtern (CCW...) und des geräteindividuellen Eintragsbereiches der Adressentabelle (AT) mit den zugehörigen Datenfeldseitennummern durch in gleicherweise zyklisch arbeitende Zeiger (Z und A') gesteuert wird, von denen einer (z. B. Z) jeweils den dem letzten bereitgestellten Kanalbefehlswort (z. B. CCWn + 2) zugehörigen Bereich im Übergabebereich (DECOMA) und ein anderer (z. B. A') jeweils den Eintragsbereich für die Datenfeldeinträge zum jeweils aktuellen Kanalbefehlswort in der Adressentabelle (AT) kennzeichnet, und daß durch Vergleich beider Zeiger (A' und Z) eine Nachladeanforderung für die weitere Bereitstellung einer durch die Zeigerdifferenz vorgegebenen Anzahl von Kanalbefehlswörtern mit den dazugehörigen Adresseneinträgen in der Adressentabelle (AT) der Adressensteuerungseinrichtung (ATU) ableitbar ist und das Nachladen gesteuert wird.

5. Verfahren nach Anspruch 4, dadurch gekennzeichnet, daß die Kennzeichnung des jeweils aktuellen Datenfeldeintrages in der Adressentabelle (AT) der Adressensteuerungseinrichtung (ATU) durch einen weiteren Zeiger (A) erfolgt.

6. Verfahren nach Ansprüche 4 und 5, dadurch gekennzeichnet, daß der Zeiger (A') zur Kennzeichnung des Eintragsbereiches Bestandteil des Zeigers (A) zur Kennzeichnung des jeweils aktuellen Eintrags in der Adressentabelle (AT) ist und aus letzterem (A) abgeleitet wird.

7. Verfahren nach einem der Ansprüche 7 bis 6, dadurch gekennzeichnet, daß die peripheren Geräte (DEV) zur Kennzeichnung des jeweils in der Adressentabelle (AT) der Adressensteuerungseinrichtung (ATU) auszuwählenden Eintrags im Zugriffsparameter (Z-PAR) eine in einfacher Weise aus dem Fortgang einer Ein-/Ausgabeoperation ableitbare Bitkombination (CONT) vorgeben, die anzeigt, welcher Eintrag des aktuellen Kanalbefehlswortes (CCWn) oder ob der erste Eintrag des nächsten oder des übernächsten Kanalbefehlswortes oder aber ein allgemeiner Zugriff zum Übergabebereich (CECOMA/DECOMA) benötigt wird, daß in Verbindung mit drei Zeigern (A', A und Z) geprüft wird, ob der gewünschte Eintrag bereits bereitgestellt ist, und daß bei bereits bereitgestellten Einträgen dieser gelesen und durch im Zugriffsparameter (Z-PAR) mitgeführte Teiladressen (z. B. Wortadresse W-AD) bzw. durch in der Adressensteuerungseinrichtung (ATU) selbst bereitgestellte Teiladressen zur reellen Speicheradresse (MM-AD) ergänzt wird, während bei noch nicht bereitgestellten Einträgen der Zugriff abgewiesen und eine entsprechende Nachladeanforderung (LOREQ) gestellt wird.

8. Verfahren nach Anspruch 7, dadurch gekennzeichnet, daß bereits verbrauchte Datenfeldeinträge in der Adressentabelle (AT) innerhalb des durch den Zeiger (A') gekennzeichneten Eintragsbereiches für jeweils das aktuelle Kanalbefehlswort (z. B. CCWn) als solche gekennzeichnet werden, daß spätestens mit Verbrauch des vorletzten Datenfeldeintrages für das aktuelle Kanalbefehlswort eine Nachladeanforderung (LOREQ) ausgelöst wird und daß nach Verbrauch des jeweils letzten Datenfeldeintrages ohne zwischenzeitliche Nachladung weitere Zugriffe zur Adressentabelle (AT) abgewiesen werden.

9. Verfahren nach Anspruch 8, dadurch gekennzeichnet, daß zu jedem Kanalbefehlswort (z. B. CCWn) jeweils zwei Datenfeldeinträge im Voraus bereitgestellt werden und daß jeweils beim Wechsel auf den anderen von den beiden Datenfeldeinträgen ein geräteindividuelles Merkbit (US) gesetzt wird, das in gesetztem Zustand bei einem weiteren Eintragswechsel weitere Zugriffe zur Adressentabelle (AT) abweist, bis es infolge eines nachgeladenen neuen Datenfeldeintrages wieder zurückgesetzt ist.

10. Verfahren nach einem der Ansprüche 1 bis 9, dadurch gekennzeichnet, daß das Erreichen des letzten Kanaltefehlswortes eines Kanalprogramms geräteindividuell vermerkt (Merker LC) wird und dadurch nachfolgend auftretende Nachladeanforderungen für die Bereitstellung weiterer Kanalbefehlswörter unterdrückt werden.

11. Verfahren nach einem der Ansprüche 1 bis 10, dadurch gekennzeichnet, daß der jeweils letzte Datenfeldeintrag zu einem Kanalbefehlswort als solcher gekennzeichnet (Merker L) wird und dadurch nachfolgend auftretende Nachladeanforderungen für die Bereitstellung weiterer Datenfeldeinträge unterdrückt werden.

12. Verfahren nach einem der Ansprüche 1 bis 11, dadurch gekennzeichnet, daß bei einem Zugriff zur Adressentabelle (AT) der Adressensteuerungseinrichtung (ATU) erkannte Nachladeanforderungen an den steuernden Prozessor (IOP) in Form der zugehörigen Gerätenummer (DEVx) gespeichert werden und daß gespeicherte Nachladeanforderungen unmittelbar in ein Anforderungssignal (LOREQ) an den steuernden Prozessor (z. B. IOP) umgesetzt werden.

13. Verfahren nach Anspruch 12, dadurch gekennzeichnet, daß jede erkannte Nachladeanforderung geräteindividuell vermerkt (Steuerbits FL bzw. LF) wird, so daß nachfolgend erkannte wiederholte Nachladeanforderungen für dasselbe Gerät (DEVx) unberücksichtigt bleiben, bis die vermerkte Nachladeanforderung erledigt ist.

14. Verfahren nach Anspruch 13, dadurch gekennzeichnet, daß bei Verwendung eines Speichers (FIFO) mit begrenzter Speicherkapazität das Bestehen einer nicht abgespeicherten Ladeanforderung und die erfolgte Speicherung der Anforderung gesondert gekennzeichnet wird (Merker LF oder FL).

15. Verfahren nach einem der Ansprüche 1 bis 14, dadurch gekennzeichnet, daß aufgrund einer Nachladeanforderung (LOREQ) der Adressensteuereinrichtung (ATU) an den steuernden Prozessor (z. B. IOP) dieser anhand der im Anforderungsspeicher (FIFO) zwischengespeicherten Gerätenummer (DEVx) die zugehörigen Zeiger (z. B. Z, A' und A) und Steuerkennzeichen (z. B. US FL, FO) ermittelt, davon abhängig das Nachladen des zugehörigen gerätespezifischen Bereiches (DECOMAx) in der erforderlichen Weise steuert und die Zeiger mit den Steuerkennzeichen entsprechend dem erreichten neuen Ladezustand ändert.

16. Verfahren nach einem der Ansprüche 7 bis 15, dadurch gekennzeichnet, daß bei im Rahmen des Ladens bzw. Nachladens von Kanalbefehlswörtern (z. B. CCWn + 1) im Übergabebereich (DECOMA) als Kanalsprungbefehle (TIC) erkannten Befehlen das jeweils durch diesen adressierte Kanalbefehlswort (z. B. CCWn + 1') bereitgestellt wird, daß jedes einem Kanalsprungbefehl vorausgehende Kanalbefehlswort als Verzweigungspunkt gekennzeichnet wird, daß mit Erreichen eines als Verzweigungspunkt gekennzeichneten Kanalbefehlswortes und erfolgter Bereitstellung der die Anfangspunkte der nachfolgenden beiden möglichen Programmzweige bildenden Kanalbefehlswörter (z. B. CCWn + 1 und CCWn + 2) ein geräteindividuelles Merkbit (FO) gesetzt wird und daß bei einem nachfolgend erkannten Wechsel des Kanalbefehlswortes durch Einstellen des das letzte nachgeladene Kanalbefehlswort kennzeichnenden Zeigers (Z) auf den Wert des das aktuelle Kanalbefehlswort als Startpunkt der gültigen Verzweigung kennzeichnenden Zeigers (A') der Ausgangspunkt für das Nachladen in dem maßgebenden Programmzweig neu festgelegt wird.

17. Anordnung zur Durchführung des Verfahrens nach einem der Ansprüche 1 bis 16, dadurch gekennzeichnet, daß die Adressensteuereinrichtung (ATU) eine Adressentabelle (AT) mit einer vorgegebenen Anzahl von Eintragssätzen für den gleichzeitigen Betrieb jeweils einer entsprechenden Anzahl von Geräten (DEV), bestehend aus jeweils einer vorgegebenen Anzahl (z. B. 8) von Einträgen, einen Steuerspeicher (MCD) mit einer wenigstens der Anzahl von Eintragssätzen in der Adressentabelle (AT) entsprechenden Anzahl von Einträgen für die geräteindividuellen Zeiger (z. B. Z und A) und Steuerkennzeichen (z. B. US, FO, FL, LF, LC) und eine gemeinsame Steuerung (ATU-ST) für die Bearbeitung der von den einzelnen Geräten (DEV) gestellten Zugriffsanforderungen und für die Steuerung des Zugriffs zu den einzelnen Einträgen der Adressentabelle (AT) sowie für die Erkennung von Nachladeanforderungen im Rahmen der Bearbeitung von Zugriffsanforderungen der Geräte (DEV) aufweist.

18. Anordnung nach Anspruch 17, dadurch gekennzeichnet, daß im Übergabebereich (CECOMA) des Speichers (z. B. MM) und in der Adressentabelle (AT) der Adressensteuereinrichtung (ATU) nur eine begrenzte Anzahl von gerätespezifischen Bereichen (DECOMA) bzw. Eintragssätzen vorgesehen ist, deren Zuordnung jeweils erst bei Einleitung einer Ein-/Ausgabeoperation für ein vorgegebenes Gerät (DEV) durch den steuernden Prozessor (z. B. IOP) erfolgt, daß aber zur Sicherung des Zugriffs der einzelnen Ein-/Ausgabemodule (CE) zu dem jeweils zugehörigen Übergabebereich (CECOMA) im Speicher (MM), auch wenn keines der Geräte (DEV) eines Moduls (CE) initiert ist, jeweils einem Gerät eines jeden Moduls wenigstens ein Eintrag bzw. ein ganzer Eintragssatz in der Adressentabelle (AT) fest zugeordnet ist, und daß in der Adressensteuereinrichtung (ATU) für die Zwischenspeicherung der getroffenen Zuordnungen eine zusätzliche Speichertabelle vorgesehen ist, über die die jeweils gültige Bereichsadresse in der Adressentabelle (AT) ermittelbar ist.

19. Anordnung nach Anspruch 18, dadurch gekennzeichnet, daß die zusätzliche Speichertabelle Bestandteil des Steuerspeichers (MCD) ist.

20. Anordnung nach einem der Ansprüche 17 bis 19, dadurch gekennzeichnet, daß die gemeinsame Steuerung (ATU-ST) einen Speicher (FIFO) zur Zwischenspeicherung der Geräteadresse (DEVx) als Nachladeanforderung für den steuernden Prozessor (z. B. IOP) aufweist, der mit einer Belegungsüberwachungseinrichtung gekoppelt ist, die bei Belegung des Speichers ein Anforderungssignal (LOREQ) an den steuernden Prozessor (z. B. IOP) liefert.

## Claims

1. A method of promptly making available real store addresses (MM-AD) for direct access to the main store (MM) by peripheral devices (DEV) in a data processing system, comprising

a main store (MM) with access control (S-BUS/BC-S) for various function units (e. g. for CPU, IOP),

a separate input/output line system (L-BUS/BC-L) with at least one connected, largely independently operating input/output module (CE...) with connected peripheral devices (DEV).

an interface control unit (S-ST) for directly coupling the input/output line system (L-BUS/BC-L) to the access control unit (S-BUS/BC-S) of the main store (MM) and

a processor (e. g. IOP) which can be coupled both to the access control unit (S-BUS/BC-S) of the main store (MM) and to the separate input/output line system (L-BUS/BC-L) and which supports the input/output operations to be performed by the input/output modules (CE), characterised in that

the real address components (e. g. page numbers PPAGE), which correspond to a predetermined number of virtual store addresses of an input/output programme, for each input/output operation are made available in advance by the supporting processor (IOP) to a separate address control device (ATU) which is coupled to the input/output line system (L-BUS/BC-L),

that on the occasion of each access to the main store (MM), requested by a peripheral device (DEV), the separate address control device (ATU) is purposively driven,

that on the basis of control parameters (Z-PAR) which are thus communicated, the real store address (MM-AD), which corresponds to the continuation of the input/output operation, is determined and is made available to the interface control unit (S-ST) for the coupling of the input/output line system (L-BUS/BC-L) to the access control unit (S-BUS/BC-S) of the main store (MM) and

that at the request of the separate address control device (ATU), real address components which are no longer required as a result of the continuation of the input/output operation are continuously replaced by the supporting processor (IOP) with real address components which are subsequently required.

2. A method as claimed in claim 1, characterised in that in a transfer zone (DECOMA), assigned to the peripheral device (DEV), of a store (e. g. MM), at the beginning of an input/output operation the supporting processor (e. g. IOP) makes available a predetermined number (e. g. 3) of channel command words (e. g. CCWn to CCWn + 2) comprising the associated items of organisation data (CCW-DATn to CCW-DATn + 2), that for each channel command word (CCW...) which is made available a predetermined number (e. g. 2) of real page numbers is determined for data arrays in the main store (MM) which are to be driven consecutively in the execution of the channel command word, that the real page numbers are input in an identical sequence into an address table (AT) of the address control device (ATU), and that with each change of a channel command word in the frame of an input/output procedure the executed channel command word is replaced by the subsequently required channel command word in a cyclic sequence and the earlier page entries in question in the address table are replaced by the new page entries.

3. A method as claimed in claim 2, characterised in that when storage zones of the main store (MM) are used as transfer zones (CECOMA/DECOMA) in the address table (AT) of the address control device (ATU) in respect of each (peripheral) device (e. g. DEVx) at least one additional entry is used for driving the transfer zone in the main store (MM) in order that channel command words (CCW...) which have been made available or other items of control data can be acquired by the peripheral devices (DEV) likewise in direct access from the main store (MM).

4. A method as claimed in one of the claims 2 or 3, characterised in that the occupation of the device-individual transfer zone (DECOMA) by channel command words (CCW...) and of the device-individual input zone of the address table (AT) by the associated data array page numbers is controlled by likewise cyclically operating pointers (Z and A'), of which one (e. g. Z) in each case identifies that part of the transfer zone (DECOMA) which is assigned to the last channel command word which has been made available (e. g. CCWn + 2) and another (e. g. A') in each case identifies the input zone for the data array entries relating to the current channel command word in the address table (AT) and that by comparing the two pointers (A' and Z), a re-loading request can be obtained for additionally making available a number — governed by the pointer difference — of channel command words with the associated address entries in the address table (AT) of the address control device (ATU) and the re-loading is controlled.

5. A method as claimed in claim 4, characterised in that the current data array entry in the address table (AT) of the address control device (ATU) is identified by an additional pointer (A).

6. A method as claimed in claims 4 and 5, characterised in that the pointer (A') which identifies the input zone forms part of the pointer (A) which identifies the current entry in the address table (AT) and is derived from said pointer (A).

7. A method as claimed in one of the claims 1 to 6, characterised in that in order to identify the respective entry which is to be selected in the address table (AT) of the address control device (ATU), in the access parameter (Z-PAR) the peripheral devices (DEV) specify a bit combination (CONT) which can be easily derived from the continuation of an input/output operation and which indicates which entry of the current channel command word (CCWn) is required or whether the first entry of the next or the next but one channel command word or however a general access to the transfer zone (CECOMA/DECOMA) is required, that in association with three pointers (A', A and Z) it is checked whether the required entry has already been made available and that when an entry has already been made available it is read and supplemented by sub-addresses (e. g. word address W-AD) included in the access parameter (Z-PAR) and by sub-addresses, already made available in the address control device (ATU), to form the real store address (MM-AD), whereas when an entry has not yet been made available the access is rejected and a corresponding reloading request (LOREQ) is made.

8. A method as claimed in claim 7, characterised in that already used data array entries in the address table (AT) within the entry zone, identified by the pointer (A'), for the current channel command word (e. g. CCWn) are characterised as such, that at the latest when the last but one data array entry for the current channel command word has been used a reloading request (LOREQ) is triggered and that when the last data array entry has been used without intermediate reloading further accesses to the address table (AT) are rejected.

9. A method as claimed in claim 8, characterised in that in respect of each channel command word (CCWn) two data array entries are made available in advance and that whenever a change takes place to the other of the two data array entries a device-individual noting bit (US) is set which in the set state, in the event of a further change of entry, rejects further accesses to the address table (AT) until it is reset as a result of a reloaded new data array entry.

10. A method as claimed in one of the claims 1 to 9, characterised in that the reaching of the last channel command word of a channel programme is noted individually in respect of each (peripheral) device (noter LC) and reloading requests, which subsequently occur as a result thereof, to make available further channel command words, are suppressed.

11. A method as claimed in one of the claims 1 to 10, characterised in that the respective last data array entry in respect of a channel command word is identified as such (noter L) and reloading requests, which subsequently occur as a result thereof, to make available further data array entries, are suppressed.

12. A method as claimed in one of the claims 1 to 11, characterised in that reloading requests to the controlling processor (IOP), recognised during access to the address table (AT) of the address control device (ATU), are stored in the form of the associated (peripheral) device number (DEVx) and that stored reloading requests are directly converted into a request signal (LOREQ) to the controlling processor (e. g. IOP).

13. A method as claimed in claim 12, characterised in that each recognised reloading request is noted individually in respect of each (peripheral) device (control bits FL, LF), so that repeated reloading requests for the same (peripheral) device (DEVx) which are subsequently recognised are disregarded until the noted reloading request has been fulfilled.

14. A method as claimed in claim 13, characterised in that when a store (FIFO) having limited storage capacity is used, the existence of an unstored loading request and the completed storage of the request are separately identified (noter LP or FL).

15. A method as claimed in one of the claims 1 to 14, characterised in that as a result of a reloading request (LOREQ) from the address control device (ATU) to the controlling processor (e. g. IOP), on the basis of the (peripheral) device number (DEVx) intermediately stored in the request store (FIFO) the controlling processor (e. g. IOP) determines the associated pointers (e. g. Z, A' and A) and control characteristics (e. g. US, FL, FO) in dependence thereupon, controls the reloading of the associated zone (DECOMAx), specifically assigned to the (peripheral) device in the required manner and changes the pointers with the control characteristics in accordance with the new loading state which has been reached.

16. A method as claimed in one of the claims 1 to 15, characterised in that when commands are recognised as channel jump commands (TIC) during the loading or reloading of channel command words (e. g. CCWn + 1 ) in the transfer zone (DECOMA), the respective channel command word (e. g. CCWn + 1') thus addressed is made available, that each channel command word which precedes a channel jump command is identified as a branching point, that when a channel command word identified as a branching point has been reached and when the channel command words (e. g. CCWn + 1 and CCWn + 2), which form the starting points of the following two possible programme branches, have been made available, a (peripheral) device individual noter bit (FO) is set and that when a change of the channel command word is subsequently recognised as a result of the setting of the pointer (Z), which identifies the last reloaded channel command word, at the value of the pointer (A') which identifies the current channel command word as starting point of the valid branch, the starting point for the reloading in the controlling programme branch is re-established.

17. An arrangement for carrying out the method claimed in one of the claims 1 to 16, characterised in that the address control device (ATU) comprises an address table (AT), which includes a predetermined number of sets of entries for the simultaneous operation of a corresponding number of peripheral devices (DEV), each of which comprises a predetermined number (e. g. 8) of entries, further comprises a control store (MCD) containing a number — corresponding at least to the number of sets of entries in the address table (AT) — of entries for the pointers (Z and A), individually assigned to the peripheral devices, and control characteristics (e. g. US, FO, FL, LF, LC) and further comprising a common control unit (ATU-ST) for the processing of the access requests made by the individual peripheral devices (DEV) and for controlling the access to the individual entries of the address table (AT) and for recognising reloading requests during the processing of access requests by the peripheral devices (DEV).

18. An arrangement as claimed in claim 17, characterised in that in the transfer zone (CECOMA) of the store (e. g. MM) and in the address table (AT) of the address control device (ATU) only a limited number of zones (DECOMA) or sets of entries, specifically assigned to peripheral devices, is provided, which are allocated only when an input/output operation for a predetermined peripheral device (DEV) is initiated by the controlling processor (e. g. IOP), but that in order to safeguard the access of the individual input/output modules (CE) to the respective associated transfer zone (CECOMA) in the store (MM) even when none of the peripheral devices (DEV) of a module (CE) is initiated, one peripheral device of each module is permanently assigned at least one entry or a whole set of entries in the address table (AT), and that in the address control device (ATU) for the intermediate storage of the allocations an additional storage table is provided via which the respective valid zone address in the address table (AT) can be determined.

19. An arrangement as claimed in claim 18, characterised in that the additional storage table forms part of the control store (MCD).

20. An arrangement as claimed in one of the claims 17 to 19, characterised in that the common control unit (ATU-ST) comprises a store (FIFO) which intermediately stores the peripheral device address (DEVx) as reloading request for the controlling processor (e. g. IOP) which is coupled to an availability monitoring device which, when the store is occupied, supplies a request signal (LOREQ) to the controlling processor (e. g. IOP).

**Revendications**

1. Procédé pour produire, d'une manière correcte dans le temps, des adresses réelles de mémoire (MM-AD) pour l'accès direct d'appareils périphériques (DEV) à la mémoire principale (MM) dans une installation de traitement de données, constituée par

une mémoire principale (MM) comportant un dispositif de commande d'accès (S-BUS/BC-S) pour différentes unités fonctionnelles (par exemple pour CPU, IOP),

un système particulier de lignes d'entrée/sortie (L-BUS/BC-L) comportant au moins un module d'entrée/sortie (CE...) qui est raccordé à ce système et opérant dans une large mesure de façon autonome et auquel sont raccordés les appareils périphériques (DEV),

un dispositif (S-ST) de commande d'interface servant à réaliser le couplage direct du système de lignes d'entrée/sortie (L-BUS/BC-L) au dispositif de commande d'accès (S-BUS/BC-S) de la mémoire principale (MM), et

un processeur (par exemple IOP), qui peut être accouplé aussi bien au dispositif de commande d'accès (S-BUS/BC-S) de la mémoire principale (MM) qu'au système particulier de lignes d'entrée/sortie (S-BUS/BC-L) et qui apporte son assistance dans les opérations d'entrée/sortie devant être exécutées par les modules d'entrée/sortie (CE), caractérisé par le fait

que les éléments réels d'adresses (par exemple les numéros de pages PPAGE), qui correspondent à un nombre prédéterminé d'adresses virtuelles de mémoire d'un programme d'entrée/sortie, pour chaque opération d'entrée/sortie sont délivrés respectivement par avance, par le processeur d'assistance (OP), à un dispositif particulier de commande d'adresses (ATU) couplé au système de lignes d'entrée/sortie (L-BUS/BC-L),

que lors de chaque accès désiré d'un appareil périphérique (DEV) de la mémoire principale (MM), le dispositif particulier de commande d'adresses (ATU) est commandé volontairement,

que sur la base de paramètres de commande (Z-PAR), qui sont alors communiqués conjointement, l'adresse réelle de mémoire (MM-AD), qui correspond au déroulement d'une opération d'entrée/sortie, est respectivement déterminée et est mise à la disposition du dispositif de commande d'interface (S-ST) pour réaliser le couplage du système de lignes d'entrée/sortie (L-BUS/BC-L) au dispositif de commande d'accès (S-BUS/BCC-S) de la mémoire principale (MM), et

que sous l'effet de la progression de l'opération d'entrée/sortie, des éléments réels d'adresses, qui ne sont plus nécessaires, sont remplacés en permanence, par le processeur d'assistance (IOP), par des éléments réels d'adresses, qui sont nécessaires ensuite, sur la demande du dispositif particulier de commande d'adresses (ATU).

2. Procédé suivant la revendication 1, caractérisé par le fait qu'un nombre prédéterminé (par exemple 3) de mots d'instructions de canal (par exemple CCWn à CCWn + 2) ainsi que les données associées d'organisation (CCW-DATn à CCW-DATn + 2) sont délivrées par le processeur d'assistance (par exemple IOP), au début d'une opération d'entrée/sortie, dans une zone de transfert (DECOMA), associée à l'appareil périphérique (DEV), d'une mémoire (par exemple MM), que pour chaque mot d'instruction de canal (CCW...) mis à disposition, un nombre prédéterminé (par exemple 2) de numéros réels de pages est respectivement déterminé pour des zones de données situées dans la mémoire principale (MM) et devant être sélectionnées ultérieurement lors de l'exécution du mot d'instruction de canal, que les numéros réels de pages sont mémorisés selon la même séquence dans une table d'adresses (AT) du dispositif de commande d'adresses (ATU), et que lors de chaque changement d'un mot d'instruction de canal dans le cadre d'une opération d'entrée/sortie, le mot d'instruction de canal exécuté est remplacé par le mot d'instruction de canal, qui est nécessaire ensuite, dans la suite cyclique et les anciennes inscriptions considérées de pages dans la table d'adresses (AT) sont remplacées par les nouvelles inscriptions de pages.

3. Procédé suivant la revendication 2, caractérisé par le fait que, dans le cas d'utilisation de zones de la mémoire principale (MM) en tant que zones de transfert (CECOMA/DECOMA) dans la table d'adresses (AT) du dispositif de commande d'adresses (ATU) on utilise, pour chaque appareil (par exemple DEVx), au moins une inscription supplémentaire pour la sélection de la zoné de transfert dans la mémoire principale (MM), afin que des mots d'instructions de canal (CCW...) mis à disposition ou d'autres données de commande puissent être appelés par les appareils périphériques (DEV), également avec un accès direct, à partir de la mémoire (MM).

4. Procédé suivant l'une des revendications 2 ou 3, caractérisé par le fait que l'occupation de la zone de transfert (DECOMA) prévue pour chaque appareil avec des mots d'instruction de canal (CCW...) et l'occupation de la zone d'inscription, prévue pour chaque appareil, de la table d'adresses (AT) avec les numéros associés de pages des zones de données sont commandées par des pointeurs (ZA') opérant cycliquement de la même manière, et dont l'un (par exemple Z) caractérise le domaine situé dans la zone de transfert (DECOMA) et associé au dernier mot d'instruction de canal mis à disposition (par exemple CCWn + 2), et dont un autre (par exemple A') caractérise la zone d'inscriptions pour les inscriptions de zones de données pour le mot actuel respectif d'instruction de canal dans la table d'adresses (AT), et qu'à partir d'une comparaison des deux pointeurs (A' et Z), on peut obtenir une demande de rechargement pour la suite de la délivrance d'un nombre, prédéterminé par la différence des pointeurs, de mots d'instructions de canal ainsi que des inscriptions d'adresses, qui leur sont associées, dans la table d'adresses (AT) du dispositif de commande d'adresses (ATU) et la commande du rechargement.

5. Procédé suivant la revendication 4, caractérisé par le fait que la caractérisation de l'entrée actuelle respective d'une zone de données dans la table d'adresses (AT) du dispositif de commande d'adresses (ATU) est réalisée au moyen d'un autre pointeur (A).

6. Procédé suivant les revendications 4 ou 5, caractérisé par le fait que le pointeur (A') servant à caractériser la zone d'entrée fait partie du pointeur (A) servant à caractériser l'inscription actuelle respective dans la table d'adresses (AT) et est dérivé de ce pointeur (A).

7. Procédé suivant l'une des revendications 1 à 6, caractérisé par le fait que pour la caractérisation de l'inscription qui doit être sélectionnée respectivement dans la table d'adresses (AT) du dispositif de commande d'adresses (ATU), les appareils périphériques (DEV) déterminent, dans le paramètre d'accès (Z-PAR), une combinaison binaire (CONT) qui peut être tirée de façon simple du déroulement d'une opération d'entrée/sortie et qui indique quelle inscription du mot actuel d'instruction de canal (CCWn) ou si la première inscription du mot d'instruction de canal immédiatement suivant ou du mot d'instruction du canal intervenant en second lieu ou bien un accès général à la zone de transfert (CECOMA/DECOMA) est nécessaire, qu'en liaison avec trois pointeurs (A', A et Z) on contrôle si l'inscription désirée est déjà mise à disposition, et que dans le cas d'inscriptions déja mises à disposition, cette inscription désirée est lue et est complétée par des adresses partielles (par exemple l'adresse de mots W-AD), introduites conjointement dans le paramètre d'accès (Z-PAR), ou par des adresses partielles mises à disposition dans le dispositif de commande d'adresses (ATU) lui-même, pour former l'adresse réelle de mémoire (MM-AD), tandis que dans le cas d'inscriptions non encore mises à disposition, l'accès est rejeté et une demande correspondante de rechargement (LOREQ) est présentée.

8. Procédé suivant la revendication 7, caractérisé par le fait que des inscriptions de zones de données déjà utilisées dans la table d'adresses (AT) sont caractérisées en tant que telles à l'intérieur de la zone d'inscriptions caractérisée par le pointeur (A'), pour respectivement le mot actuel d'instruction de canal (par exemple CCWn), qu'ultérieurement, lors de l'utilisation de l'avant-dernière inscription de la zone de données pour le mot actuel d'instruction de canal, une demande de rechargement (LOREQ) est déclenchée et qu'après l'utilisation de la dernière inscription respective d'une zone de données sans rechargement intermédiaire, d'autres accès à la table d'adresses (AT) sont rejetés.

9. Procédé suivant la revendication 8, caractérisé par le fait que respectivement deux entrées de zones de données sont préparées par avance pour chaque mot caractéristique de canal (par exemple CCWn) et que, respectivement lors du passage à l'autre des deux inscriptions de zones de données, il se produit le positionnement d'un bit de marquage (US) prévu pour chaque appareil et qui, à l'état positionné, rejette d'autres accès à la table d'adresses (AT) dans le cas d'un autre changement d'inscription jusqu'à ce qu'il soit à nouveau ramené à l'état initial par suite d'une nouvelle inscription rechargée d'une zone de données.

10. Procédé suivant l'une des revendications 1 à 9, caractérisé par le fait que le fait d'atteindre le dernier mot d'instruction de canal d'un programme de canaux est marqué individuellement pour chaque appareil (indicateur LC) et que de ce fait, des demandes de rechargement qui apparaissent ultérieurement pour la mise à disposition d'autres mots d'instruction de canal sont supprimées.

11. Procédé suivant l'une des revendications 1 à 10, caractérisé par le fait que la dernière inscription respective d'une zone de données pour un mot d'instruction de canal est caractérisée en tant que telle (indicateur L) et que de ce fait des demandes de rechargement, qui apparaissent ensuite, pour la mise à disposition d'autres inscriptions de zones de données, sont supprimées.

12. Procédé suivant l'une des revendications 1 à 11, caractérisé par le fait que dans le cas d'un accès à la table d'adresses (AT) du dispositif de commande d'adresses (ATU) des demandes de rechargement identifiées envoyées au processeur (IOP) réalisant la commande, sont mémorisées sous la forme du numéro associé d'appareil (DEVx) et que des demandes mémorisées de rechargement sont converties directement en un signal de demande (LOREQ) envoyé au processeur exécutant la commande (par exemple IOP).

13. Procédé suivant la revendication 12, caractérisé par le fait que chaque demande identifiée de rechargement est marquée d'une manière individuelle pour chaque appareil (bits de commande FL ou LF) de telle sorte qu'ensuite les demandes de rechargement répétées et identifiées concernant le même appareil (DEVx) ne sont pas prises en compte jusqu'à ce que la demande de rechargement marquée soit traitée.

14. Procédé suivant la revendication 13, caractérisé par le fait que dans le cas de l'utilisation d'une mémoire (FIFO) possédant une capacité de mémoire limitée, l'existence d'une demande de chargement non mémorisée et la mémorisation exécutée de la demande sont caractérisées d'une manière particulière (indicateurs LF ou FL).

15. Procédé suivant l'une des revendications 1 à 14, caractérisé par le fait que sur la base d'une demande de rechargement (LOREQ) du dispositif de commande d'adresses (ATU), envoyée au processeur (par exemple IOP) exécutant la commande, ce dernier détermine, sur la base des numéros d'appareils (DEVx) mémorisés temporairement dans la mémoire de demandes (FIFO), les pointeurs associés (par exemple Z, A' et A), et les signaux caractéristiques de commande (par exemple US, FL, FO), commandent de la manière requise, en fonction de cette détermination, le rechargement de la zone associée (DECOMAx) spécifique pour l'appareil, et modifient les pointeurs possédant les signaux caractéristiques de commande, conformément au nouvel état de charge atteint.

16. Procédé suivant l'une des revendications 1 à 15, caractérisé par le fait que dans le cas d'instructions identifiées en tant qu'instructions de sauts de canal (TIC) dans le cadre du chargement ou du rechargement de mots d'instructions de canal (par exemple CCWn + 1) dans la zone de transfert (DECOMA), le mot d'instruction de canal (par exemple CCWn + 1') adressé respectivement par ces instructions, est mis à disposition, que chaque mot d'instruction de canal, qui précède une instruction de saut de canal, est caractérisé comme étant un point de branchement, que lorsqu'un mot caractéristique de canal caractérisé en tant que point de branchement est atteint et que la mise à disposition des mots d'instructions de canal (par exemple CCWn + 1 et CCWn + 2), qui constituent les points de départ des deux branches possibles ultérieures du programme, sont mis à disposition, un bit de marquage (FO) prévu individuellement pour chaque appareil est positionné et que dans le cas d'un changement identifié ultérieurement du mot d'instruction de canal par suite du réglage du pointeur (Z), qui caractérise le dernier mot d'instruction de canal rechargé, sur la valeur du pointeur (A') caractérisant la valeur du mot actuel d'instruction de canal en tant que point de départ de branchement valable, le point de départ pour le rechargement est à nouveau fixé dans la branche déterminante du programme.

17. Dispositif pour la mise en œuvre du procédé suivant l'une des revendications 1 à 16, caractérisé par le fait que le dispositif de commande d'adresses (ATU) comporte une table d'adresses (AT) possédant un nombre prédéterminé d'ensembles d'inscriptions pour le fonctionnement simultané respectivement d'un nombre correspondant d'appareils (DEV), ces ensembles d'inscriptions étant constitués par respectivement un nombre prédéterminé (par exemple 8) d'inscriptions, une mémoire de commande (MCD) comportant un nombre, correspondant au moins au nombre d'ensembles d'inscriptions dans le tableau d'adresses (AT) d'inscriptions pour les indicateurs (par exemple Z et A) prévus individuellement pour les appareils et pour les signaux de commande (par exemple US, FO, FL, LF, LC), et un dispositif de commande commun (ATU-ST) pour le traitement des demandes d'accès présentées par les différents appareils (DEV) et pour la commande de l'accès aux différentes inscriptions de la table d'adresses (AT) ainsi que pour l'identification de demandes de rechargement dans le cadre du traitement de demandes d'accès des appareils (DEV).

18. Dispositif suivant la revendication 17, caractérisé par le fait que la zone de transfert (CECOMA) de la mémoire (par exemple MM) et dans la table d'adresses (AT) du dispositif de commande d'adresses (ATU), il n'est prévu qu'un nombre limité de zones (DECOMA) ou d'ensembles d'inscriptions, qui sont spécifiques pour les appareils et dont l'association est réalisée respectivement seulement lors du déclenchement d'une opération d'entrée/sortie pour un appareil prédéterminé (DEV) par le processeur (par exemple IOP) exécutant la commande, mais que pour garantir l'accès des différents modules d'entrée/sortie (CE) à la zone de transfert respectivement associée (CECOMA) située dans la mémoire (MM), et ce même lorsque aucun des appareils (DEV) d'un module (CE) n'est déclenché, au moins une inscription ou un ensemble d'inscriptions dans la table d'adresses (AT) est associé de façon fixe respectivement à un appareil de chaque module, et que dans le dispositif de commande d'adresses (ATU) il est prévu, pour la mémorisation temporaire des associations considérées, une table supplémentaire de mémoire, au moyen de laquelle l'adresse de zones respectivement valables dans la table d'adresses (AT) peut être déterminée.

19. Dispositif suivant la revendication 18, caractérisé par le fait que la table de mémoire supplémentaire fait partie de la mémoire de commande (MCD).

20. Dispositif suivant l'une des revendications 17 à 19, caractérisé par le fait que le dispositif de commande commun (ATU-ST) comporte une mémoire (FIFO) servant à réaliser la mémorisation intermédiaire de l'adresse (DEVx) de l'appareil en tant que demande de rechargement pour le processeur exécutant la commande (par exemple IOP), cette mémoire étant couplée à un dispositif de contrôle d'occupation qui, dans le cas de l'occupation de la mémoire, envoie un signal de demande (LOREQ) au processeur exécutant la commande (par exemple IOP).

# FIG 1

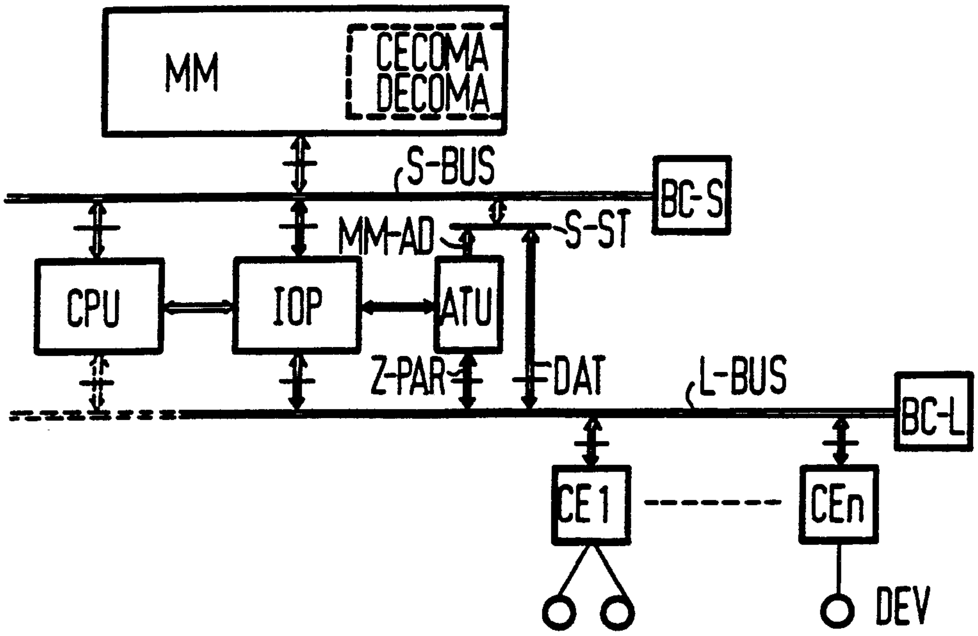
MM
CECOMA
DECOMA
S-BUS
BC-S
MM-AD
S-ST
CPU
IOP
ATU
Z-PAR
DAT
L-BUS
BC-L
CE1
CEn
DEV

# FIG 2

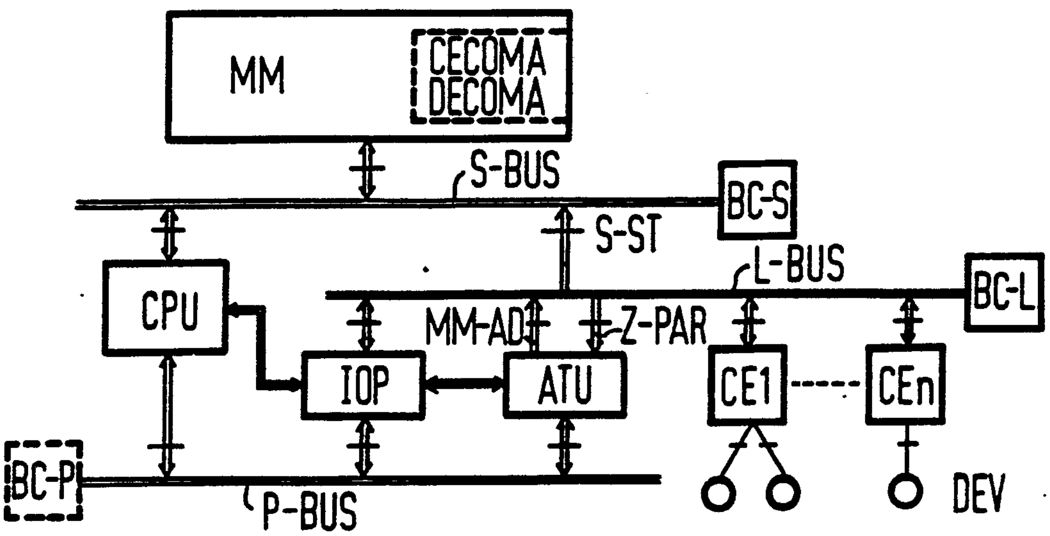
MM
CECOMA
DECOMA
S-BUS
BC-S
S-ST
L-BUS
BC-L
CPU
MM-AD
Z-PAR
IOP
ATU
CE1
CEn
BC-P
P-BUS
DEV

FIG 3

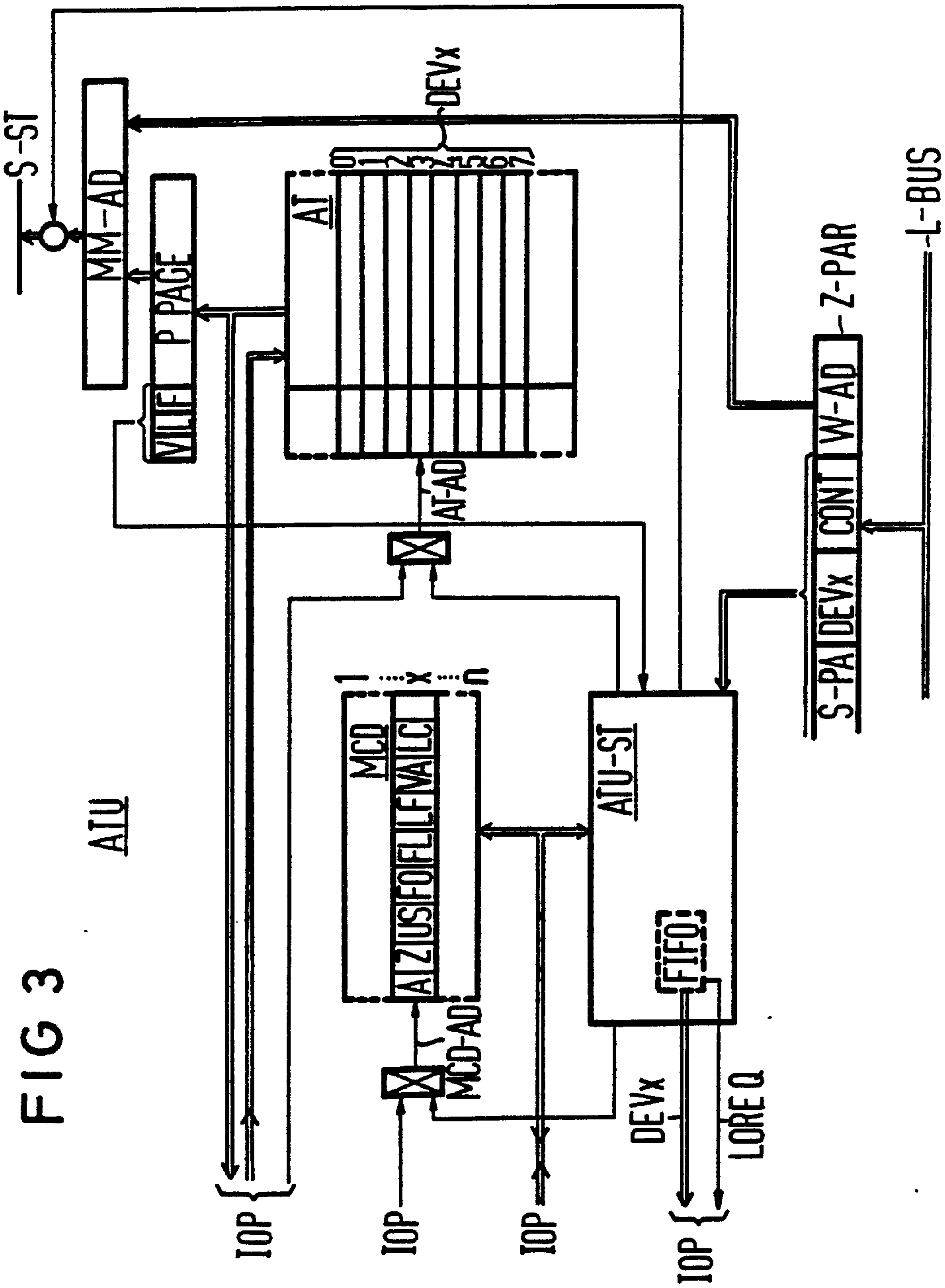

ATU
MM-AD
S-ST
P PAGE
MLF
AT
DEVx
0 1 2 3 4 5 6 7
AT-AD
MCD
AI ZI US FO FL LF VA LC
1 x n
ATU-ST
FIFO
MCD-AD
DEVx
LORE Q
IOP
IOP
IOP
IOP
S-PA DEVx CONT W-AD
Z-PAR
L-BUS

FIG 4

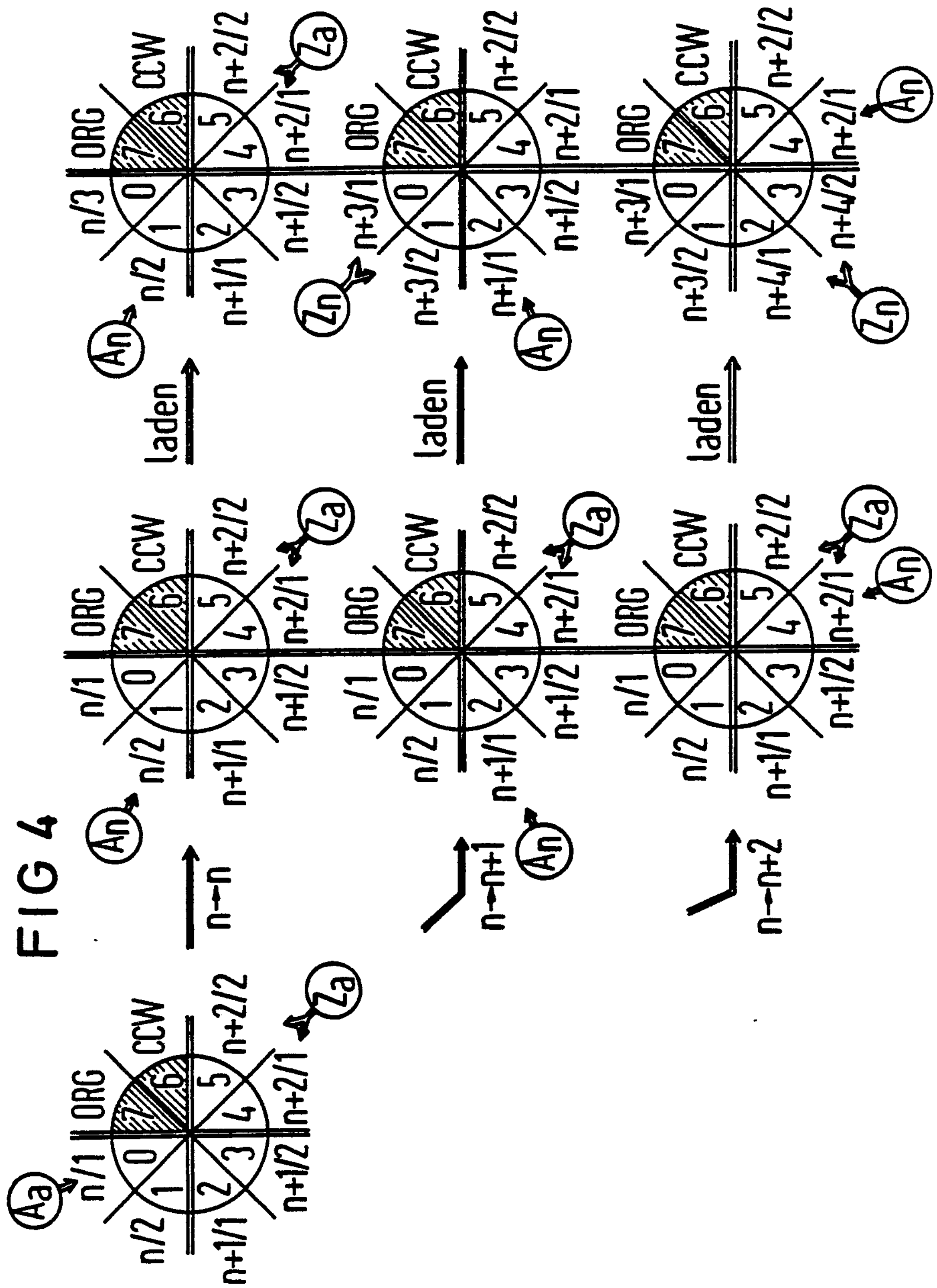
Aa
An
Za
Zn
ORG
CCW
n/1
n/2
n/3
n+1/1
n+1/2
n+2/1
n+2/2
n+3/1
n+3/2
n+4/1
n+4/2
0
1
2
3
4
5
6
7
n→n
n→n+1
n→n+2
laden

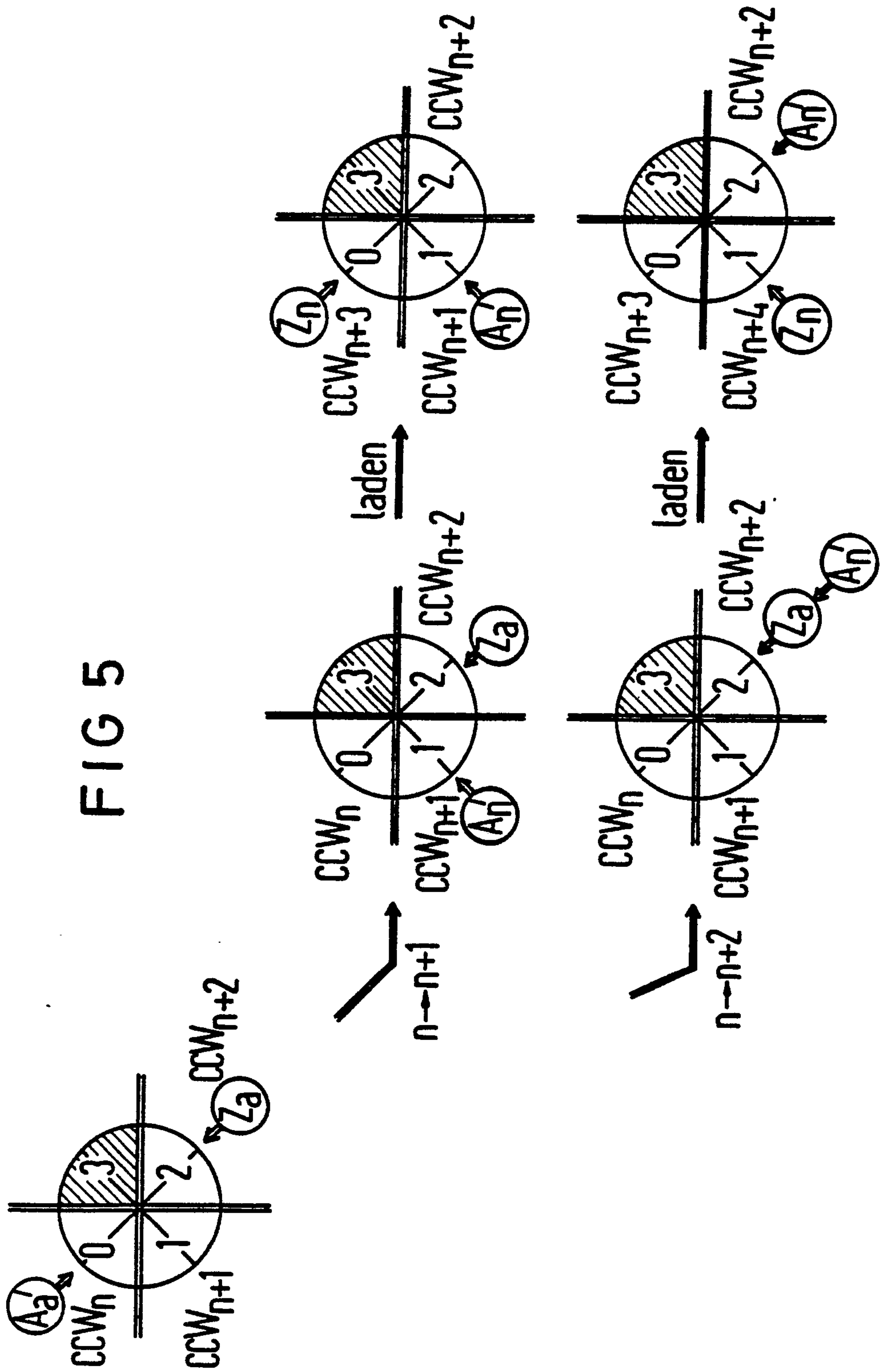


FIG 5

FIG 6A

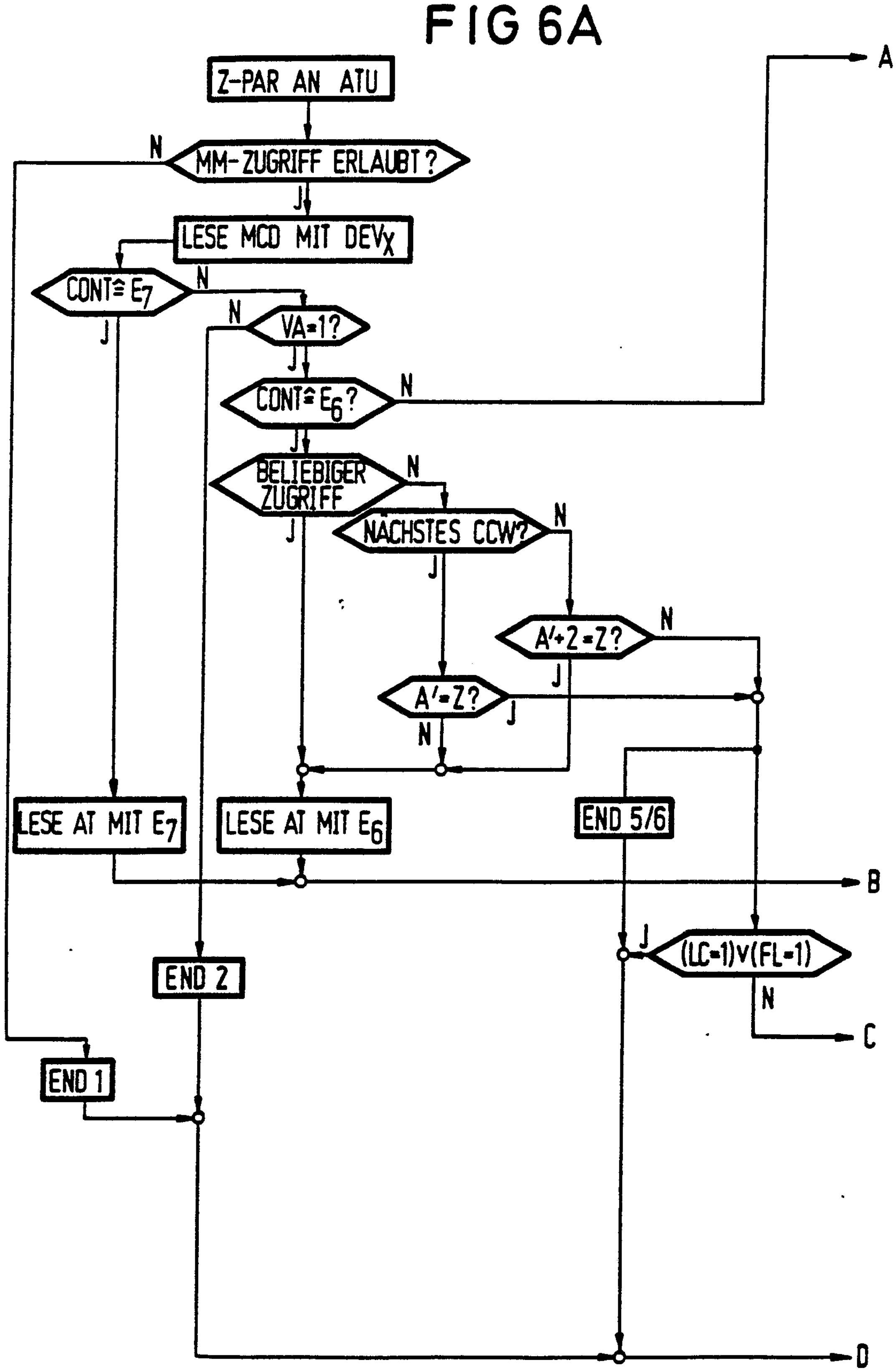
Z-PAR AN ATU
MM-ZUGRIFF ERLAUBT?
N
J
LESE MCD MIT DEVX
CONT≙E7
N
J
VA=1?
N
J
CONT≙E6?
N
J
BELIEBIGER ZUGRIFF
N
J
NÄCHSTES CCW?
N
J
A'+2=Z?
N
J
A'=Z?
J
N
LESE AT MIT E7
LESE AT MIT E6
END 5/6
(LC=1)v(FL=1)
J
N
END 2
END 1
A
B
C
D

FIG 6B

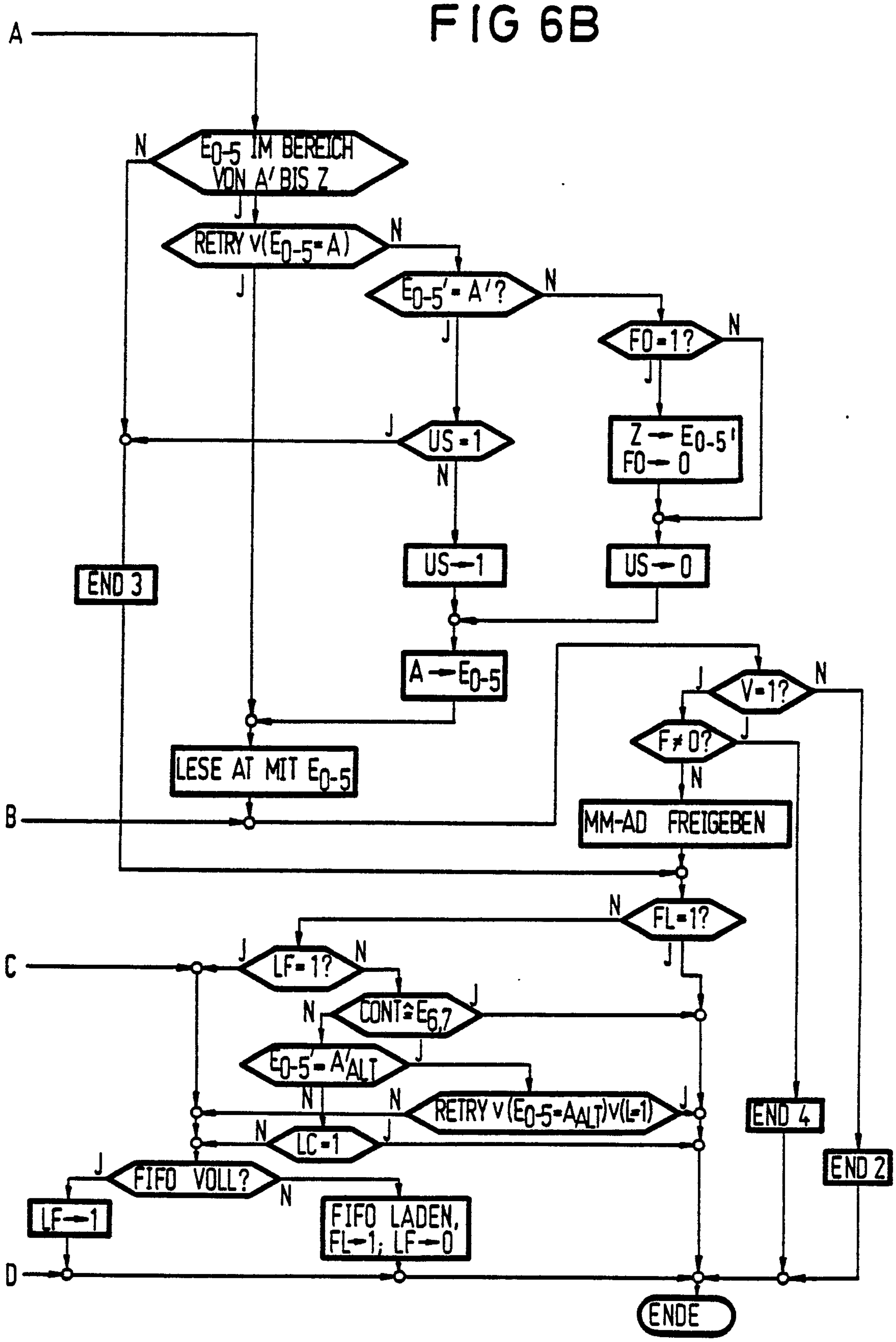

A
$E_{0-5}$ IM BEREICH VON A' BIS Z
N
J
RETRY v($E_{0-5}$ = A)
N
J
$E_{0-5}$' = A'?
N
J
F0 = 1?
N
J
Z → $E_{0-5}$'
F0 → 0
US = 1
J
N
US → 1
US → 0
END 3
A → $E_{0-5}$
LESE AT MIT $E_{0-5}$
B
V = 1?
J
N
F ≠ 0?
J
N
MM-AD FREIGEBEN
FL = 1?
N
J
C
LF = 1?
J
N
CONT ≙ $E_{6,7}$
N
J
$E_{0-5}$' = A'$_{ALT}$
J
N
RETRY v ($E_{0-5}$ = $A_{ALT}$) v (L = 1)
N
J
LC = 1
N
J
END 4
END 2
FIFO VOLL?
J
N
LF → 1
FIFO LADEN, FL → 1; LF → 0
D
ENDE

FIG 7A

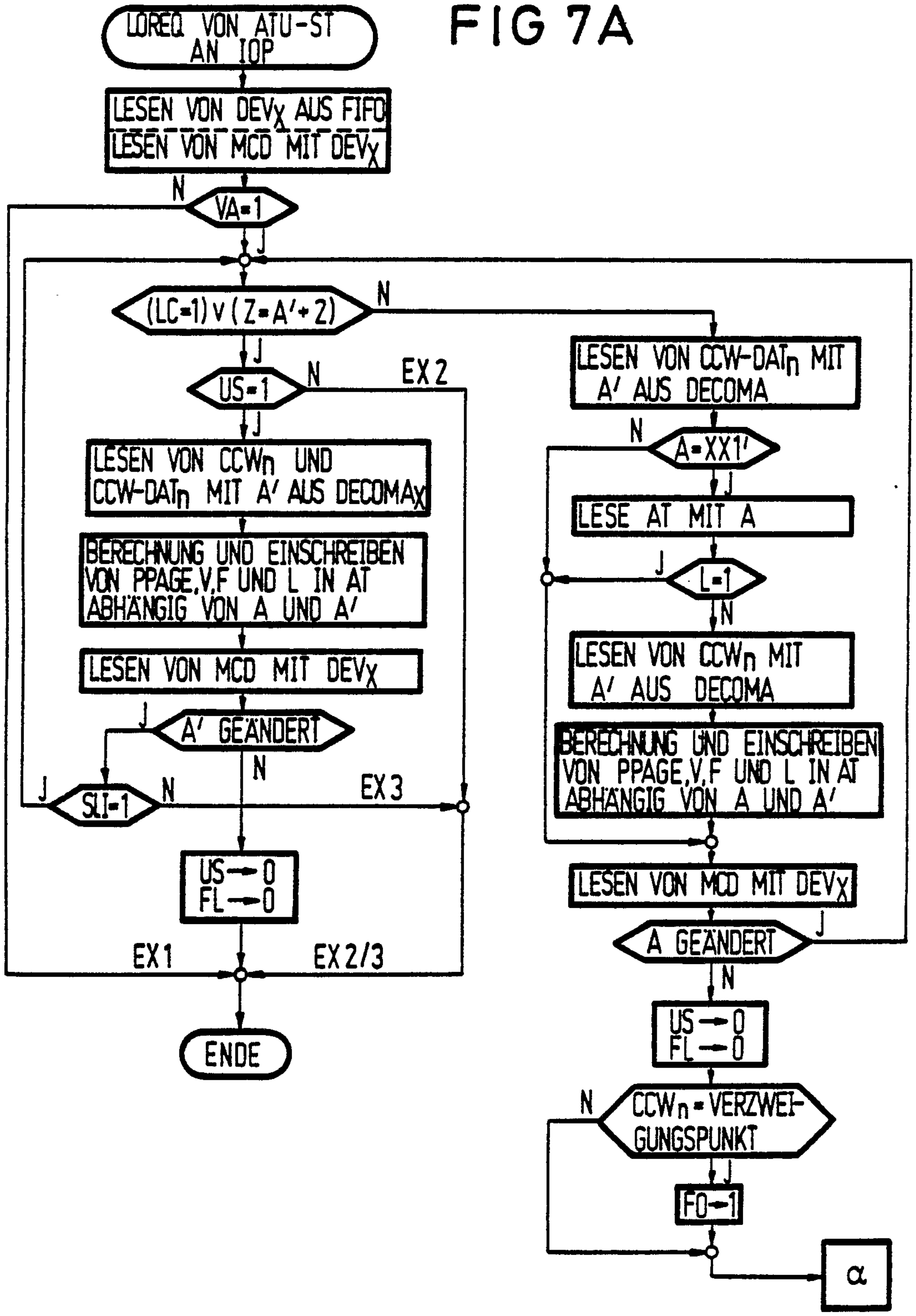
LOREQ VON ATU-ST AN IOP
LESEN VON DEVx AUS FIFO
LESEN VON MCD MIT DEVx
VA=1
N
J
(LC=1) v (Z=A'+2)
N
J
US=1
N
EX 2
J
LESEN VON CCWn UND CCW-DATn MIT A' AUS DECOMAx
BERECHNUNG UND EINSCHREIBEN VON PPAGE,V,F UND L IN AT ABHÄNGIG VON A UND A'
LESEN VON MCD MIT DEVx
A' GEÄNDERT
J
N
SLI=1
J
N
EX 3
US→0
FL→0
EX 1
EX 2/3
ENDE
LESEN VON CCW-DATn MIT A' AUS DECOMA
A=XX1'
N
J
LESE AT MIT A
L=1
J
N
LESEN VON CCWn MIT A' AUS DECOMA
BERECHNUNG UND EINSCHREIBEN VON PPAGE,V,F UND L IN AT ABHÄNGIG VON A UND A'
LESEN VON MCD MIT DEVx
A GEÄNDERT
J
N
US→0
FL→0
CCWn = VERZWEIGUNGSPUNKT
N
J
FO→1
α

FIG 7B

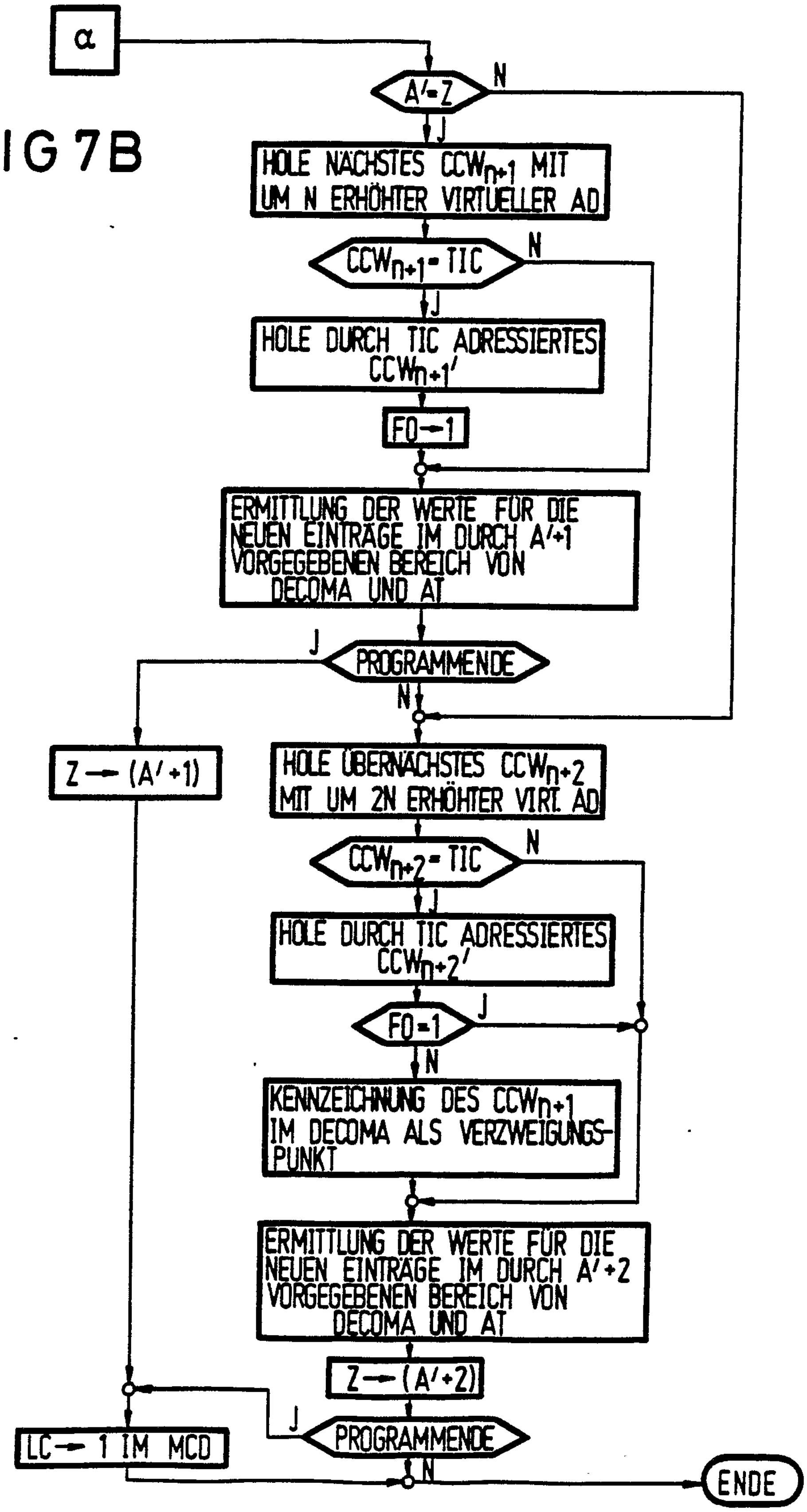
α
A'=Z
N
J
HOLE NÄCHSTES $CCW_{n+1}$ MIT UM N ERHÖHTER VIRTUELLER AD
$CCW_{n+1}$ = TIC
HOLE DURCH TIC ADRESSIERTES $CCW_{n+1}'$
F0→1
ERMITTLUNG DER WERTE FÜR DIE NEUEN EINTRÄGE IM DURCH A'+1 VORGEGEBENEN BEREICH VON DECOMA UND AT
PROGRAMMENDE
Z→(A'+1)
HOLE ÜBERNÄCHSTES $CCW_{n+2}$ MIT UM 2N ERHÖHTER VIRT. AD
$CCW_{n+2}$ = TIC
HOLE DURCH TIC ADRESSIERTES $CCW_{n+2}'$
F0=1
KENNZEICHNUNG DES $CCW_{n+1}$ IM DECOMA ALS VERZWEIGUNGS-PUNKT
ERMITTLUNG DER WERTE FÜR DIE NEUEN EINTRÄGE IM DURCH A'+2 VORGEGEBENEN BEREICH VON DECOMA UND AT
Z→(A'+2)
PROGRAMMENDE
LC→1 IM MCD
ENDE

FIG 8